(19) Europäisches Patentamt
European Patent Office
Office européen des brevets

(11) **EP 2 029 903 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(51) Int Cl.:
***B60R 9/06*** *(2006.01)* ***B60R 9/10*** *(2006.01)*

(21) Anmeldenummer: **07725762.4**

(22) Anmeldetag: **01.06.2007**

(86) Internationale Anmeldenummer:
**PCT/EP2007/004882**

(87) Internationale Veröffentlichungsnummer:
**WO 2007/137868 (06.12.2007 Gazette 2007/49)**

(54) **NIETMUTTER BZW. NIETBOLZEN UND KOMBINATION EINER NIETMUTTER BZW. NIETBOLZEN MIT EINEM BLECHTEIL**

RIVET NUT AND RIVET PIN AND COMBINATION OF A RIVET NUT AND A RIVET PIN WITH A SHEET PART

ÉCROU OU BOULON À RIVER ET COMBINAISON D'UN ÉCROU OU BOULON À RIVER AVEC UN ÉLÉMENT EN TÔLE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.06.2006 DE 202006008721 U**
**25.05.2007 PCT/EP2007/004699**

(43) Veröffentlichungstag der Anmeldung:
**04.03.2009 Patentblatt 2009/10**

(73) Patentinhaber: **Profil Verbindungstechnik GmbH & Co. KG**
**61381 Friedrichsdorf (DE)**

(72) Erfinder:
• **BABEJ, Jiri**
**35423 Lich (DE)**

• **HUMPERT, Richard**
**61191 Rosbach v.d.H. (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A- 1 500 461      EP-A1- 0 539 793**
**EP-A1- 0 561 715      WO-A-2005/099930**
**FR-A- 2 624 568      US-A- 1 332 687**
**US-A- 3 253 631      US-A- 5 502 888**
**US-B1- 6 318 940**

**Beschreibung**

Die vorliegende Erfindung betrifft ein Zusammenbauteil, umfassend ein Bleichteil und eine Nietmutter mit einem Körperteil und einem zylinderförmigen Nietabschnitt, wobei der Körperteil einen mittig angeordneten Gewindezylinder, eine ringförmige Auflagefläche, die koaxial zum Gewindezylinder in einer Ebene senkrecht zur Längsachse des Gewindezylinders steht, und eine radial innerhalb der ringförmigen Auflagefläche und radial außerhalb des zylindrischen Nietabschnitts angeordnete axial gerichtete Ringnut aufweist, die auf der radial inneren Seite in die äußere Fläche des zylindrischen Nietabschnitts übergeht und wobei Verdrehsicherungsrippen im Bereich der Ringnut vorgesehen sind. Die Erfindung betrifft ferner ein Zusammenbauteil, umfassend ein Blechteil und einem Nietbolzen und die Kombination eines Nietbolzens mit einem Blechteil.

Nietmuttern der eingangs genannten Art sind auf dem Gebiet der Verbindungselemente in Form der so genannten RND-Muttern der Firma Profil Verbindungstechnik GmbH und Co. KG gut bekannt und werden häufig in der industriellen Fertigung von Blechteilen insbesondere, jedoch nicht ausschließlich im Bereich der Karosserieherstellung eingesetzt. Solche Nietmuttern sind im europäischen Patent EP 1116891 geschützt und beschrieben.

In der Praxis werden solche RND-Muttern üblicherweise durch das Klemmlochnietverfahren gemäß dem europäischen Patent 593793 an das Blechteil angebracht. Dieses Verfahren erfordert, dass das Blechteil zunächst mit einer in etwa konusförmigen Erhebung versehen wird, dass der Nietabschnitt der Nietmutter durch ein Loch in der konusförmigen Erhebung hindurchgeführt wird, und dass die konusförmige Erhebung bei gleichzeitiger Umbördelung des Nietabschnitts zumindest teilweise flach gepresst wird, wodurch ein erheblicher "Würgegriff" zwischen dem Blechteil und der Nietmutter entsteht, der die Verdrehsicherung durch die sich radial erstreckenden Verdrehsicherungsrippen unterstützt, die die axial gerichtete Ringnut überbrücken. In Seitenansicht haben diese Verdrehsicherungsrippen eine Form, die der der Ringnut entspricht, wobei sie eine maximale Höhe aufweist, die in etwa der maximalen Tiefe der Ringnut entspricht. Da die axiale Ringnut auf der radial äußeren Seite eine schräge Form aufweist und sich im Wesentlichen als eine Konusfläche mit einem eingeschlossenen Konuswinkel von etwa 135° darstellt, nimmt die axiale Höhe der Verdrehsicherungsrippen in Richtung der ringförmigen Anlagefläche gehend auf Null ab. Das Blechteil wird somit durch die Verdrehsicherungsrippen im Bereich des umgebördelten Nietabschnitts nicht durchschnitten, und der Nietbördel kann in der konkaven Unterseite der teilweise flach gepressten konusförmigen Erhebung aufgenommen werden. Bei der praktischen Anwendung des so entstandenen Blechteils wird ein weiteres Bauteil an das Blechteil auf der Nietbördelseite angebracht und dort durch eine Schraube fixiert, die von der Nietbördelseite kommend in den Gewindezylinder eingeschraubt wird. Dabei wird das Blechteil zwischen dem Bauteil und der ringförmigen Auflagefläche durch Anziehen der Schraube festgeklemmt, und es entsteht so eine hochwertige Schraubverbindung zwischen dem Blechteil und dem Bauteil.

Ein weiterer Vorteil einer RND-Nietmutter ist darin zu sehen, dass sie mit verschiedenen Blechdicken verwendet werden kann, ohne dass für jede Blechdicke eine jeweilige Nietmutter mit gesonderter Länge des Nietabschnitts oder Form der Ringnut erforderlich ist.

Die konusförmige Erhebung wird häufig nicht vollständig flach gepresst. Dies ist durchaus zulässig und für manche Anwendungen sogar wünschenswert, da die verbleibende konusförmige Erhebung in der Anschraubsituation in Kompression belastet wird, und es ergibt sich eine sehr steife Schraubverbindung, die wechselnde, im Betrieb einsetzende Kräfte gut aufnimmt. Allerdings erweckt ein solches Zusammenbauteil vor allem bei relativ dünnen Blechen durch die herstellungstechnisch kaum vermeidbare Rundung des Elements radial außerhalb der ringförmigen Auflagefläche, verstärkt durch den noch sichtbaren konusförmigen Verlauf des Blechteils den Eindruck, dass das Element nicht richtig auf dem Blechteil vernietet ist, obwohl dies im Allgemeinen nicht zutrifft.

In der Praxis gibt es ferner mögliche Anwendungen, bei denen die Nietbördelseite des Blechteils möglichst in einer Ebene liegen soll, so dass eine verbleibende konusförmige Erhebung möglichst klein gehalten werden muss, und bei der eine etwaige Ringvertiefung, die radial außerhalb des Nietbördels und radial innerhalb der ringförmigen Blechauflagefläche der Nietmutter vorliegt, in ihrer radialen Ausdehnung möglichst klein gehalten werden soll. Es ist aber dennoch erforderlich, eine hochfeste Schraubverbindung mit gutem Herausdreh- und Auspresswiderstand, insbesondere bei dünnen Blechteilen von beispielsweise 0,6 mm Dicke, herbeizuführen. Ferner ist es bei manchen Anwendungen erwünscht, eine kleine Bauhöhe des Zusammenbauteils bestehend aus der Nietmutter und dem Blechteil zu erreichen.

Aufgabe der vorliegenden Erfindung ist es, die oben genannten Forderungen zu erfüllen und ein Zusammenbauteil mit einem Nietelement bzw. einem Nietbolzen vorzusehen, das unabhängig von der Blechdicke auf der Blechoberfläche plan aufsitzt und bei dem der Nietbördel nicht über die Unterseite des Bleches hinausragt.

Diese Aufgabe wird durch ein Zusammenbauteil gemäß Anspruch 1 gelöst.

Es wird eine Nietmutter vorgesehen, die sich dadurch auszeichnet, dass die Ringnut in einer axialen Schnittebene gesehen einen U-förmigen Querschnitt aufweist mit einer radial äußeren Seitenwand, die relativ steil ausgeführt ist und an der steilsten Stelle eine Neigung zur mittleren Längsachse der Nietmutter im Bereich von etwa 45° bis etwa -20°, vorzugsweise von etwa 30° bis etwa 0° aufweist, und dass das Volumen der Ringnut derart gewählt ist, dass über einen Bereich von Blechdicken, der der jeweiligen Gewindegröße angepasst ist, das Volumen des jeweils umgelegten Bereiches des Nietabschnitts innerhalb der durch Einformen des Blechteils in die Ringnut des Elements gebildeten Ringvertiefung Platz hat und nicht über die der ringförmigen Auflagefläche abgewandten Seite des eingeformten Bleches hinausragt.

Ferner sieht die Erfindung ein Zusammenbauteil mit einem Nietbolzen gemäß Anspruch 11 mit einer entsprechenden Ausbildung vor.

Durch die besondere Querschnittsform der Ringnut und der bewusst klein gewählten axialen Höhe der Verdrehsicherungsrippen gelingt es, eine qualitativ hochwertige Nietverbindung und gleichzeitig eine möglichst ebene Ausbildung auf der Nietbördelseite des Blechteils zu erzeugen.

Der der jeweiligen Blechdicke angepasste Blechdickenbereich ist wie folgt gewählt:

Gewinde M6 oder 1/4 UNF - Blechdickenbereich vorzugsweise 0,5 mm bis 2,5 mm, mindestens 0,6 mm bis 1,5 mm,
Gewinde M8 oder 5/16 UNF - Blechdickenbereich vorzugsweise 0,5 mm bis 2,5 mm, mindestens 0,6 mm bis 1,5 mm,
Gewinde M10 oder 3/8 UNF - Blechdickenbereich vorzugsweise 1,0 mm bis 3,0 mm, mindestens 1,0 mm bis 2,5 mm,
Gewinde M12 oder 7/16 UNF - Blechdickenbereich vorzugsweise 1,0 mm bis 3,5 mm, mindestens 1,0 mm bis 2,5 mm.

Hieraus ist ersichtlich, dass durch korrekte erfindungsgemäße Auslegung der jeweiligen Nietmutter ein erheblicher Blechdickenbereich abgedeckt werden kann, der alle in der PKW-Herstellung vorkommenden Blechdicken vernünftig berücksichtigt.

Die genaue Querschnittsform der einen im Allgemeinen U-förmigen Querschnitt aufweisenden Ringnut kann eine der folgenden Querschnittsformen aufweisen:

a) eine U-Form mit dem Bodenbereich in einer Ebene senkrecht zur mittleren Längsachse der Nietmutter und mit gerundeten Ecken im Bereich des Übergangs des Bodenbereiches in die Seitenwände der Ringnut, wobei die gerundeten Ecken einen relativ kleinen Radius, beispielsweise im Bereich zwischen einem Fünftel und einem Zehntel der axialen Tiefe der Ringnut, aufweisen,

b) eine U-Form mit dem Bodenbereich in einer Ebene senkrecht zur mittleren Längsachse der Nietmutter und mit gerundeten Ecken im Bereich des Übergangs des Bodenbereiches in die Seitenwände der Ringnut, wobei die gerundeten Ecken einen relativ großen Radius, beispielsweise im Bereich zwischen zwei Drittel und einem Fünftel der axialen Tiefe der Ringnut, aufweisen,

c) eine U-Form mit einem gekrümmten Bodenbereich mit in etwa einer Kreisform, die sich jedoch über weniger als 180° erstreckt, beispielsweise im Bereich zwischen 180° und 150°, der entweder unmittelbar über einen kleinen Radius, beispielsweise im Bereich zwischen einem Fünftel und einem Zehntel der maximalen axialen Tiefe der Ringnut, in die ringförmige Auflagefläche ausläuft und mehr oder weniger sanft in die zylindrische Außenfläche des Nietabschnitts übergeht oder über einen Geradeanteil und einen relativ kleinen Radius in die ringförmige Auflagefläche ausläuft und mehr oder weniger sanft in die zylindrische Außenfläche übergeht,

d) eine U-Form mit einem gekrümmten Bodenbereich mit in etwa einer Kreisform, die sich jedoch über 180° oder mehr erstreckt, beispielsweise im Bereich zwischen 180° und 210°, der entweder unmittelbar über einen kleinen Radius, beispielsweise im Bereich zwischen einem Fünftel und einem Zehntel der maximalen axialen Tiefe der Ringnut, in die ringförmige Auflagefläche ausläuft und mehr oder weniger sanft in die zylindrische Außenfläche des Nietabschnitts übergeht oder über einen Geradeanteil und einen relativ kleinen Radius in die ringförmige Auflagefläche ausläuft und mehr oder weniger sanft in die zylindrische Außenfläche übergeht,

e) eine zu einer V-Form tendierende Querschnittsform, die nicht durch die Erfindung abgedeckt ist, mit einem relativ kleinen oder relativ großen Radius im Bodenbereich, der beispielsweise eine Größe weniger als die Hälfte der maximalen Tiefe der Ringnut aufweist, wobei die radial äußere Seite der Nut einen steileren Winkel als deren radial inneren Seite aufweist,

f) eine U-Form mit einer radial inneren und einer radial äußeren Seite, die beide zumindest im Wesentlichen parallel zur mittleren Längsachse verlaufen und sich über eine axiale Länge im Bereich zwischen einem Zehntel und zwei Drittel der maximalen axialen Tiefe der Ringnut erstrecken, und mit einem Bodenbereich mit einer zu einer V-Form tendierenden Querschnittsform mit einem relativ kleinen oder relativ großen Radius im Bodenbereich, der beispielsweise eine Größe weniger als ein Drittel der maximalen Tiefe der Ringnut aufweist, wobei

f1) entweder die radial äußere Seite der Nut einen steileren Winkel als deren radial innere Seite aufweist oder
f2) umgekehrt oder

f3) beide Seiten zumindest im Wesentlichen den gleichen Winkel aufweisen,

g) eine U-Form ähnlich der gemäß den Merkmalen f), f1), f2) oder f3), wobei jedoch nur eine der radial inneren Seite und der radial äußeren Seite zumindest im Wesentlichen parallel zur mittleren Längsachse verläuft und die andere geneigt, vorzugsweise über einen relativ kleinen Radius, beispielsweise im Bereich zwischen einem Fünftel und einem Zwanzigstel der maximalen axialen Tiefe der Ringnut, in die ringförmige Auflagefläche oder die zylindrische Außenfläche des Nietabschnitts übergeht,

h) eine U-Form ähnlich der gemäß Merkmal a) oder Merkmal b) aufweist, wobei aber mindestens eine der radial inneren Seite und der radial äußeren Seite der U-Form eine Hinterschneidung bildet.

Wie aus der obigen Auflistung ersichtlich, kann die U-Form der Ringnut innerhalb relativ breit gesteckter Grenzen gewählt werden. Wichtig erscheint vor allem, dass die Ausbildung der radial äußeren Seitenwand sich an die Vorgaben des Anspruchs 1 hält. Dann gelingt es, vorausgesetzt die restlichen Abmessungen der Ringnut sind entsprechend der erfindungsgemäßen Lehre ausgewählt, die erfindungsgemäße Aufgabe zu erfüllen.

Wesentlich für den erwünschten "Direct Clamp", "die direkte Klemmung" ist ein Winkel zwischen Flansch und Nut von etwa 45° bis etwa -20°, vorzugsweise von etwa 30 bis 90°.

Die weitere Form der Nut ist für diese Funktion nicht relevant. Sie dient zur Aufnahme von Blechmaterial und Restniet und muss daher lediglich optimal dimensioniert sein. Die Form der Verdrehsicherungsmerkmale ist ebenfalls nicht unbedingt ausschlaggebend für das flächige Aufsitzen der Mutter auf dem Blech bzw. das Erreichen einer planaren Anschraubfläche bei der Anbringung eines weiteren Bauteils an ein Zusammenbauteil bestehend aus der erfindungsgemäßen Nietmutter und einem Blechteil, an dem die Nietmutter angebracht ist, sie können aber so gewählt werden, dass sie die Anpassung des Restvolumens des Nietabschnitts an das Volumen der Ringvertiefung in der Ringsicke des Blechteils nach dessen Einformung in die Ringnut sicherstellen.

Die EP0539793 A1 zeigt einen aus dem Stand der Technik bekannten Nietbolzen. Ferner zeigt die US6,318,940B1 eine aus dem Stand der Technik bekannte Nietmutter.

Zwar sind Nietelemente mit einer im Allgemeinen einen U-förmigen Querschnitt aufweisenden Ringnut an sich bekannt, beispielsweise aus der FR-A-2792270 oder der US-A-3,213,914.

Bei dem Element gemäß der FR-A-2792270 dient die Nut lediglich als Müllauffangreservoir für durch axiale Rippen verdrängtes Blechmaterial. Der umgebördelte Nietabschnitt bei der französischen Schrift steht über die Unterseite des Blechteils hervor und ist nicht mit diesem in etwa flächenbündig wie es beim Anmeldungsgegenstand erforderlich ist.

Bei der US-A-3,213,914 wird der Nietabschnitt nicht zu einem Nietbördel umgelegt, sondern ein Ringkragen wird vom Nietabschnitt abgeschabt, um das Blechteil in die Ringnut aufzunehmen. Das Werkzeug, das die Abschabung des Ringkragens bewirkt, braucht aber für diesen Vorgang eine stabile Form die zu einer erheblichen Ringvertiefung am Blechteil radial außerhalb des Ringkragens führt. Dies bedeutet, dass die erfindungsgemäße Aufgabe in Bezug auf eine möglichst vollständige Füllung der Ringvertiefung des Blechteils mit dem umgebördelten Nietabschnitt, damit die satte Anlage des Zusammenbauteils bestehend aus der Nietmutter und dem Blechteil an einem weiteren Blechteil und die erwünschte direkte Klemmung erreicht wird, nicht erfüllt ist. Stattdessen braucht die Auslegung gemäß US-A-3,213,914 eine Kosten verursachende stabile Unterlegscheibe, und andererseits, dass die Nietmutter unnötig groß gemacht werden muss.

Bei der erfindungsgemäßen Auslegung der Nietmutter besteht eine große Freiheit bei der Auslegung der Verdrehsicherungsmerkmale. Diese können ein oder eine Kombination der folgenden Ausbildungen aufweisen:

a) Verdrehsicherungsrippen die sich in radialer Richtung über den Bodenbereich der Ringnut erstrecken und eine axiale Höhe aufweisen, die einen Bruchteil der maximalen axialen Tiefe der Ringnut beträgt,

b) Verdrehsicherungsrippen, die an ihrer der Bodenfläche der U-förmigen Nut abgewandten Seite in radialer Richtung verlaufen, d.h. in einer radialen Ebene liegen, die senkrecht zur mittleren Längsachse der Nietmutter steht,

c) Verdrehsicherungsrippen, die sich erhaben am zylindrischen Nietabschnitt entlang erstrecken

d) Verdrehsicherungsrippen, die sich erhaben am zylindrischen Nietabschnitt entlang und in etwa bis zur axialen Höhe der ringförmigen Auflagefläche erstrecken,

e) Verdrehsicherungsrippen, die sich erhaben am zylindrischen Nietabschnitt entlang und über die axiale Höhe der ringförmigen Auflagefläche hinaus erstrecken,

f) Verdrehsicherungsrippen, die sich erhaben am zylindrischen Nietabschnitt entlang und über die axiale Höhe der ringförmigen Auflagefläche hinaus erstrecken und unmittelbar vor einer Rundung am freien Ende des Nietabschnitts auslaufen,

g) Verdrehsicherungsrippen, die sich erhaben an der radial äußeren Seite der Ringnut entlang erstrecken.

h) Verdrehsicherungsrippen, die sich in radialer Richtung im Bodenbereich der Ringnut erstrecken und in Seitenansicht eine zumindest im Wesentlichen dreieckige Form aufweisen und im Bereich des Nietabschnitts höher sind als im Bereich der radial äußeren Seite der Ringnut,

i) Verdrehsicherungsrippen, die sich in radialer Richtung im Bodenbereich der Ringnut erstrecken und in Seitenansicht eine zumindest im Wesentlichen dreieckige Form aufweisen und im Bereich der radial äußeren Seite der Ringnut höher sind als im Bereich des Nietabschnitts,

j) Verdrehsicherungsrippen, die sich in radialer Richtung im Bodenbereich der Ringnut erstrecken und in Seitenansicht eine zumindest im Wesentlichen vierseitige Form aufweisen, deren von der Bodenfläche abgewandte Seite einen schrägen Verlauf aufweist und deren radial innere am Nietabschnitt gelegene Seite höher ist als deren im Bereich der radial äußeren Seite der Ringnut gelegene Seite,

k) Verdrehsicherungsrippen, die sich in radialer Richtung im Bodenbereich der Ringnut erstrecken und in Seitenansicht eine zumindest im Wesentlichen vierseitige Form aufweisen, deren von der Bodenfläche abgewandte Seite einen schrägen Verlauf aufweist und deren im Bereich der radial äußeren Seite der Ringnut gelegene Seite höher ist als deren radial innere am Nietabschnitt gelegene Seite,

l) Verdrehsicherungserhöhungen im Bodenbereich der Ringnut, die in Draufsicht eine in etwa sternförmige Gestalt mit einem inneren Loch aufweist, das an den zylindrischen Nietabschnitt anschließt, wobei die Spitzen der sternförmigen Gestalt an der radial äußeren Seite der Ringnut gelegen sind,

m) eine Verdrehsicherungsvertiefung im Bodenbereich der Ringnut, die in Draufsicht eine in etwa sternförmige Gestalt mit einem inneren Loch aufweist, das an den zylindrischen Nietabschnitt anschließt, wobei die Spitzen der sternförmigen Gestalt an der radial äußeren Seite der Ringnut gelegen sind,

n) eine gerändelte Außenseite des Nietabschnitts,

o) eine Bodenfläche der Ringnut mit einer einer Stirnverzahnung entsprechenden Ausbildung,

p) einen gewellten Verlauf der radial äußeren Seite der Ringnut, deren sanft gerundete Berge und Täler eine Verdrehsicherung bilden,

q) sich radial erstreckende Vertiefungen in der ringförmigen Auflagefläche, die sich vorzugsweise nicht über die volle Breite dieser erstrecken und ihre tiefste Stellung benachbart zur Ringnut aufweisen und an der radial äußeren Seitenwand der Ringnut Vorsprünge mit Hinterschneidungen bilden,

r) sich radial erstreckende Vertiefungen in der ringförmigen Auflagefläche, die eine teilzylindrische Querschnittsform aufweisen und schräg gestellt sind, so dass sie ihre tiefste Stellung benachbart zur Ringnut aufweisen und eine hinterschnittene Ringform der radial äußeren Seitenwand der Ringnut unterbrechen,

s) bogenförmig verlaufende Erhebungen oder Vertiefungen an bzw. in der Bodenfläche der Ringnut,

wobei im Falle von diskreten Verdrehsicherungsmerkmalen an der radial inneren Seite der Ringnut, d.h. an der zylindrischen Außenfläche des Nietabschnitts, an der Bodenfläche der Ringnut oder an der radialen äußeren Seite der Ringnut oder an der ringförmigen Auflagefläche diese miteinander in radialer Richtung fluchten oder winkelmäßig in Bezug auf die mittlere Längsachse gegeneinander versetzt sind oder im Falle von zwei oder mehr der genannten Möglichkeiten teilweise miteinander in radialer Richtung fluchten und teilweise winkelmäßig in Bezug auf die mittlere Längsachse gegeneinander versetzt sind.

Diese Freiheit bei der Auswahl der Verdrehsicherungsmerkmale macht es auch möglich, eine Art "Feinanpassung" vorzunehmen, um das Volumen der Ringvertiefung im Blechteil für verschiedene Blechdicken noch besser an das Volumen des umgelegten Nietabschnitts, d.h. des Nietbördels, vorzunehmen.

Günstig ist es, wenn die axiale Tiefe der Ringnut in etwa der radialen Dicke des zylindrischen Nietabschnitts entspricht.

Durch die Erfindung und erst recht durch diese Maßnahme gelingt es, auch ohne Anwendung des Klemmlochnietverfahrens sicherzustellen, dass die U-förmige Ringnut durch das Blechteil sowie durch den umgebördelten Nietabschnitt gut gefüllt ist, so dass das Blechteil während der Ausbildung des Nietbördels gestaucht wird und hierdurch auch eine permanente kompressive Spannung im Blechteil im Bereich um die Wurzel des Nietabschnitts herum erzeugt wird, d.h. im Bereich, wo der Nietabschnitt in den Körperteil der Nietmutter übergeht, so dass der bevorzugte Würgegriff hier entsteht, und zwar ohne das Blechteil im Bereich der ringförmigen Blechauflagefläche der Nietmutter zu verformen.

Bei praktischen Ausführungen der Nietmutter können radial am Boden der Ringnut sich erstreckende Verdrehsicherungsrippen eine axiale Höhe im Bereich zwischen 0,2 und 0, 6 mm aufweisen, aber vorzugsweise von maximal dem 0,7-fachen der vorgesehenen Blechdicke.

Diese Bemessungsregel stellt sicher, dass die Verdrehsicherungsrippen das Blechteil nicht durchschneiden, dass aber dennoch eine vernünftige, formschlüssige Verbindung entsteht, die durch den umgebördelten Nietabschnitt stets in formschlüssigem Eingriff gehalten wird, um so einen ausreichenden Verdrehwiderstand zu erzeugen.

Dabei ist es günstig, wenn von 4 bis 24 Verdrehsicherungsrippen vorgesehen sind. Die Verdrehsicherungsrippen sind vorzugsweise gleichmäßig um die mittlere Längsachse der Nietmutter angeordnet.

Besonders bevorzugt ist es, wenn die Bodenfläche der U-förmigen Ringnut in einer radialen Ebene liegt, die senkrecht zur mittleren Längsachse der Nietmutter steht. Bei dieser Ausführungsform können die Verdrehsicherungsrippen an ihrer der Bodenfläche der U-förmigen Nut abgewandten Seite in radialer Richtung verlaufen, d.h. in einer radialen Ebene liegen, die senkrecht zur mittleren Längsachse der Nietmutter steht.

Die Nietmuttern nach der vorliegenden Lehre sind im Regelfall in Draufsicht kreisrund, sie können aber eine andere Form haben, beispielsweise können sie polygonal, insbesondere rechteckig oder quadratisch sein. Bei einer rechteckigen oder quadratischen Form können die Nietmuttern auch entsprechend dem Verfahren hergestellt werden, das in der deutschen Patentanmeldung 102005024220.0 bzw. in der internationalen Patentanmeldung PCT/EP2006/004977 mit der Veröffentlichungsnummer WO 2006/125634 beschrieben ist.

Der innere Durchmesser des zylindrischen Nietabschnitts ist geringfügig größer als der Außendurchmesser des Gewindezylinders und geht über einen Gewindeeinlauf in diesen über.

Um eine geringe Bauhöhe des Zusammenbauteils bestehend aus dem Blechteil und der Nietmutter zu erreichen, ist es günstig, wenn die dem Nietabschnitt abgewandte Stirnseite der Nietmutter zumindest im Wesentlichen in einer Ebene liegt, die senkrecht zur mittleren Längsachse der Nietmutter steht.

Bei Verdrehsicherungsrippen, die sich erhaben am zylindrischen Nietabschnitt entlang erstrecken, laufen diese vorzugsweise vor der Rundung der äußeren Seite des freien Endes des Nietabschnitts aus.

Die Kombination einer Nietmutter nach der vorliegenden Lehre mit einem Blechteil zeichnet sich dadurch aus, dass das Blechteil im Bereich des Nietabschnitts mit einer Erhebung vorgesehen ist, die zumindest im Wesentlichen an die Form der U-förmigen Nut angepasst ist, und auf seiner der U-förmigen Nut abgewandten Seite eine der Nutform ähnlichen Ringvertiefung aufweist, die aber in etwa um die Blechdicke kleiner ist als die U-förmige Nut, und dass der umgebördelte Nietabschnitt vollständig innerhalb der Vertiefung angeordnet ist und nicht über die dem Gewindezylinder abgewandte Seite des Blechteils hinausragt. Die Kombination eines Nietbolzens nach der vorliegenden Lehre mit einem Blechteil zeichnet sich entsprechend dem Anspruch 11 aus.

Das Volumen der ringförmigen Vertiefung entspricht zumindest im Wesentlichen dem Volumen des jeweils umgebördelten Nietabschnitts.

Dabei greifen die Verdrehsicherungsrippen formschlüssig in das Blechmaterial ein, schneiden dieses aber nicht durch.

Besonders günstig ist es, dass die Anbringung der Nietmutter oder des Nietbolzens an das Blechteil mit einer Nietmatrize bei der vorliegenden Ausbildung der Nietmutter bzw. des Nietbolzens dazu führt, dass der Rand des Blechteils im Bereich der Lochung, durch die sich der Nietabschnitt erstreckt, verdickt bzw. wulstartig ausgebildet ist, und der Nietbördel mit einer entsprechenden, den verdickten Rand aufnehmenden Ringvertiefung auf der dem Gewindezylinder zugewandten Seite versehen ist.

Diese Ausbildung führt zu einer Steigerung der Verdrehsicherung und auch zu einer Steigerung des Auspresswiderstandes.

Die Erfindung wird nachfolgend anhand eines Ausbildungsbeispiels näher erläutert unter Bezugnahme auf die Zeichnung, in welcher zeigen:

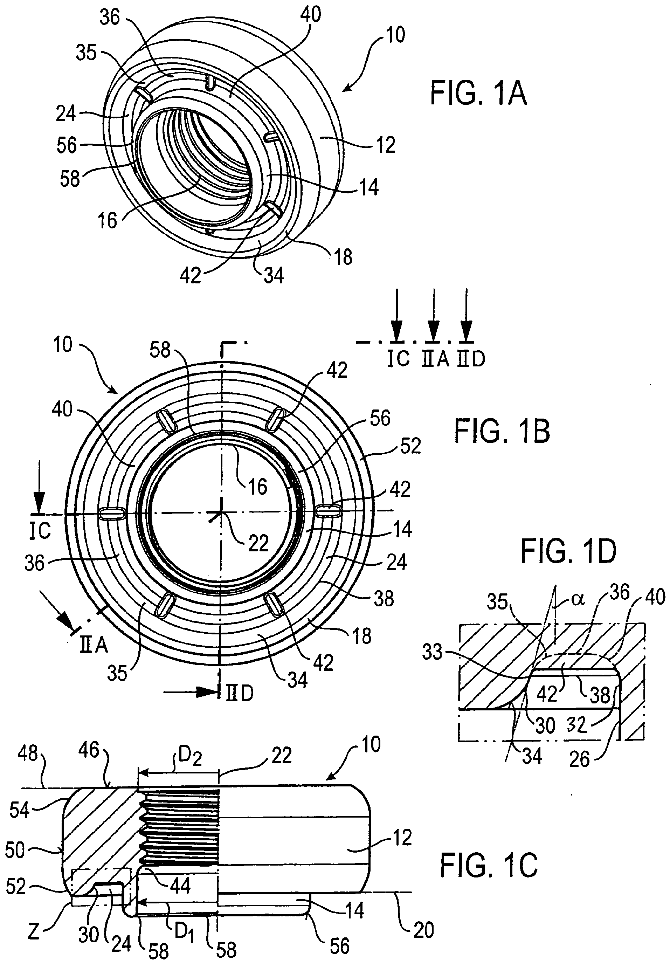

Fig. 1A      eine perspektivische Darstellung einer erfindungsgemäßen Nietmutter,

Fig. 1B      eine Draufsicht auf die Nietmutter der Fig. 1A entsprechend der Pfeilrichtung IB,

Fig. 1C      eine teilweise geschnittene Darstellung und Seitenansicht der Nietmutter der Fig. 1A und 1B entsprechend der Ebene IC-IC der Fig. 1B,

| | |
|---|---|
| Fig. 1D | eine Detailzeichnung des Bereiches Z der Darstellung gemäß Fig. 1C, |
| Fig. 2A | eine teilweise geschnittene und teilweise in Seitenansicht gezeigte Darstellung der Nietmutter der Fig. 1A-1D entsprechend der Ebene 2A-2A der Fig. 1B, |
| Fig. 2B | eine geschnittene Ansicht eines Blechteils zur Anwendung mit der Nietmutter gemäß Fig. 2A, |
| Fig. 2C | eine Seitenansicht einer Matrize zur Anwendung mit dem Blechteil der Fig. 2B und der Nietmutter der Fig. 2A zur Ausbildung des Nietbördels, |
| Fig. 2D | eine Darstellung des Zusammenbauteils, das durch die Vernietung der Nietmutter gemäß Fig. 2A und mit dem Blechteil gemäß Fig. 2B unter Anwendung der Matrize der Fig. 2C entsteht, wobei die Darstellung der Fig. 2D teilweise geschnitten und teilweise in Seitenansicht erfolgt, |
| Fig. 2E, 2F | zwei unterschiedliche, vergrößerte Darstellungen des Details Z, und zwar einmal (Fig. 2E) an einer Stelle, an der keine Verdrehsicherungsrippe vorgesehen ist, und einmal (Fig. 2F) an einer Stelle, wo die Schnittebene durch die Verdrehsicherungsrippe gelegt ist, und |
| Fig. 3A-3D | Zeichnungen entsprechend den Zeichnungen der Fig. 1A-1D, jedoch von einer weiteren erfindungsgemäßen Nietmutter. |
| Fig. 4A | eine schematische Darstellung zur Erläuterung der Auslegung einer im Querschnitt rechteckigen Nut zum Zwecke der vorliegenden Erfindung, |
| Fig. 4B | eine Tabelle, die die in der Berechnung verwendeten Abkürzungen angibt, |
| Fig. 4C | eine tabellarische Zusammenstellung des Ergebnisses der Berechnung für vier Gewindegrößen M6, M8, M10 und M12, |
| Fig. 5A-5M | verschiedene mögliche Querschnittsformen für die Ringnut eines erfindungsgemäßen Elements, |
| Fig. 6A, 6B - 16A, 16B | die Zusammenbausituation für die Nutformen gemäß Fig. 5A-5M für jeweils ein dünnes Blech und ein dickes Blech, d.h. die Situation, in der die Nietmutter bzw. das Nietelement mit dem jeweiligen Blechteil vernietet ist, |
| Fig. 17A-17D | bis |
| 41A-41D | verschiedene Beispiele für mögliche Verdrehsicherungsmerkmale, die mit der erfindungsgemäßen Nietmutter bzw. dem erfindungsgemäßen Nietbolzen verwendet werden können, |
| Fig. 42A-42E | die Verwendung der vorliegenden Erfindung mit einer selbststanzenden Nietmutter, |
| Fig. 43A - 43G | die Verwendung der vorliegenden Erfindung mit zwei verschiedenen Nietbolzen. |

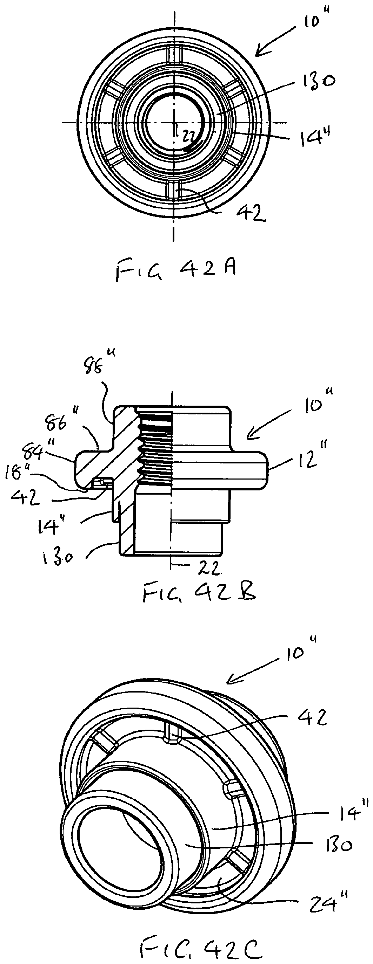

Alle oben genannten Figuren sind maßstabgetreu gezeichnet, jedoch vergrößert dargestellt, wobei nur ein Ausschnitt aus dem Blechteil und der Matrize dargestellt ist. Im Allgemeinen handelt es sich um die Darstellung von Elementen (Nietmuttern oder Nietbolzen) mit einem M8-Gewinde. Die Ausnahme ist die Nietmutter der Fig. 42A bis 42E, die ein M6-Gewinde aufweist. Aus diesen Angaben können bei Bedarf die anderen Maße abgeleitet werden.

Bezugnehmend zunächst auf die Fig. 1A bis 1D zeigen diese eine Nietmutter 10 mit einem Körperteil 12 und einem zylinderförmigen Nietabschnitt 14, wobei der Körperteil einen mittig angeordneten Gewindezylinder 16, eine ringförmige Auflagefläche 18, die koaxial zum Gewindezylinder in einer Ebene 20 senkrecht zur Längsachse 22 des Gewindezylinders (zugleich die mittlere Längsachse der Nietmutter) steht, und eine radial innerhalb der ringförmigen Auflagefläche 18 und radial außerhalb des zylindrischen Nietabschnitts 14 angeordnete axial gerichtete Ringnut 24 aufweist. Die Ringnut 24 geht auf der radial inneren Seite in die äußere Fläche des zylindrischen Nietabschnitts über und Verdrehsicherungsrippen 42 sind im Bereich der Ringnut 24 vorgesehen.

Wie insbesondere aus den Fig. 1C und Fig. 1D ersichtlich ist, weist die Ringnut 24 in einer axialen Schnittebene IC gesehen einen U-förmigen Querschnitt auf mit einer radial äußeren Seitenwand 30, die relativ steil ausgeführt ist und an der steilsten Stelle 33 eine Neigung α (Fig. 1D) zur mittleren Längsachse der Nietmutter im Bereich von etwa 45° bis etwa - 20°, vorzugsweise von etwa 30° bis etwa 0° aufweist, in diesem Fall von α = 15°. Die steilste Stelle 33 kann durch einen Inflexionspunkt oder -bereich gebildet werden, der, wie in diesem Beispiel, durch zwei ineinander gehende Radien 34, 35 am Eingang der Ringnut 24 und am Übergang von der radial äußeren Seite 30 der Ringnut in deren Bodenfläche 36 gebildet ist. Die Bodenfläche 36 der U-förmigen Ringnut liegt vorzugsweise in einer radialen Ebene, die senkrecht zur mittleren Längsachse 22 der Nietmutter parallel zu Ebene 20 steht. Die Bezeichnung "Inflexionspunkt" trifft natürlich für die Schnittebene zu, die in Fig. 1C bzw. 1D zu sehen ist. Da es eine unendliche Zahl von möglichen Schnittebenen um die mittlere Längsachse 22 herum gibt, bilden sie eine unendliche Anzahl einzelner Inflexionspunkte entsprechend einer Linie 38, die in Fig. 1D klar zu erkennen ist. Die Bodenfläche 36 der Ringnut 24 geht über einen weiteren Radius 40 in die äußere Fläche 26 des Nietabschnitts 14 über.

In diesem Beispiel sind Verdrehsicherungsrippen 42 vorhanden, die sich in radialer Richtung über den Bodenbereich 36 der Ringnut 24 erstrecken und eine axiale Höhe aufweisen, die einen Bruchteil der maximalen axialen Tiefe der Ringnut 24 beträgt.

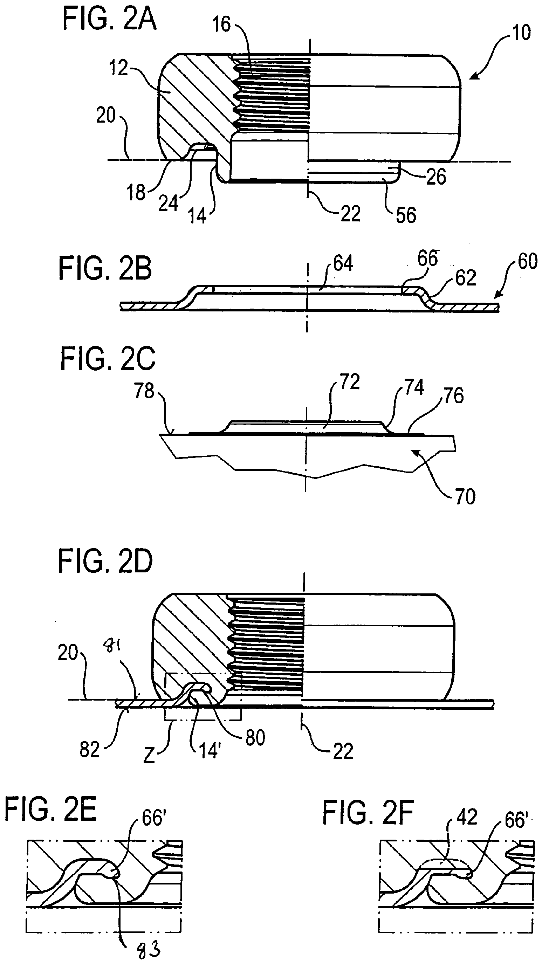

Die axiale Tiefe der Ringnut 24 entspricht in etwa der radialen Dicke des zylindrischen Nietabschnitts. Besonders günstig ist es, wenn das Volumen des umgebördelten Nietabschnitts (14' in Fig. 2D) dem Volumen der Ringvertiefung 80 (Fig. 2D) des in der Ringnut eingedrückten Blechteils im Wesentlichen entspricht, und zwar selbst dann, wenn dies dazu führt, dass die axiale Dicke des umgebördelten Nietabschnitts 14 nicht der axialen Tiefe der Ringnut 14, d.h. dem Abstand zwischen der Bodenfläche 36 der Nut und der Ebene 20 in den Fig. 1C bzw. 2A, entspricht.

Die axiale Höhe der Verdrehsicherungsrippen liegt im Bereich zwischen 0,2 und 0,6 mm, sollte aber etwa 85 % der vorgesehenen Blechdicke nicht übersteigen.

In diesem Beispiel sind sechs Verdrehsicherungsrippen 42 vorhanden; dies ist aber unkritisch, es kann beispielsweise ohne Einschränkung von 3 bis 24 Verdrehsicherungsrippen 42 vorgesehen werden, die vorzugsweise gleichmäßig um die mittlere Längsachse 22 der Nietmutter angeordnet sind.

Die Verdrehsicherungsrippen 42 verlaufen an ihrer der Bodenfläche der U-förmigen Nut abgewandten Seite in radialer Richtung, d.h. in einer radialen Ebene, die senkrecht zur mittleren Längsachse 22 der Nietmutter steht.

Der innere Durchmesser $D_1$ des zylindrischen Nietabschnitts (Fig. 1C) ist geringfügig größer als der Außendurchmesser D2 des Gewindezylinders und geht in diesen über einen Gewindeeinlauf 44 über.

Die dem Nietabschnitt 14 abgewandte Stirnseite 46 der Nietmutter liegt zumindest im Wesentlichen in einer Ebene 48, die senkrecht zur mittleren Längsachse 22 der Nietmutter 10 steht.

Aus den Figuren, insbesondere aus Fig. 1C, sieht man deutlich, dass die Mantelfläche 50 der Nietmutter 10 über zwei gerundete Flächen 52 und 54 in die ringförmige Blechauflagefläche 18 bzw. die Stirnseite 46 übergeht. Es handelt sich hier nicht um eindeutige Radien, sondern um Flächen, die durch die Herstellung des Elements mittels eines Kaltschlagverfahrens entstehen.

Wird das Element, wie auch möglich ist, in einem Folgeverbundwerkzeug entsprechend der oben genannten PCT-Anmeldung PCT/EP2006/125634 hergestellt, so hat es anstatt der kreisrunden Form gemäß den beigefügten Figuren, eine rechteckige Form, wobei kleinere Radien dann nur an zwei entgegengesetzten Seiten des Elements vorhanden sind, und zwar im Übergang von diesen Seiten in die entsprechende Blechauflagefläche und in die entsprechende Stirnseite. Bei einem rechteckigen bzw. quadratischen oder polygonalen Element ist die Blechauflagefläche 18 ebenfalls als ringförmig zu bezeichnen, sie hat eine kreisförmige innere Begrenzung und eine äußere, eher quadratische bzw. polygonale Begrenzung.

Schließlich zeigt die Fig. 1C, dass der Nietabschnitt 14 an seinem freien Stirnende außen eine Rundung 56 und innen eine konusförmige oder auch gerundete Fläche 58 aufweist. Diese innere konusförmige oder gerundete Fläche ist hier bei dem Einnietvorgang von Vorteil, der nachfolgend im Zusammenhang mit den Fig. 2A-2F näher beschrieben wird.

In Fig. 2A sieht man wiederum die Nietmutter 10 gemäß den Fig. 1A-1D, jedoch hier teilweise geschnitten und in einer Seitenansicht entsprechend der Ebene IIA-IIA der Fig. 1B. Unmittelbar darunter und damit ausgerichtet, befindet sich ein Blechteil 60 mit einer in Draufsicht kreisförmigen Sicke 62, die gelocht wird, um ein kreisförmiges Loch 64 mit Lochrand 66 zu bilden. Das mittig angeordnete Loch 64 hat eine mittlere Längsachse, die mit der mittleren Längsachse 22 der Nietmutter 10 fluchtet. Die äußere Form der Sicke 62 entspricht zumindest im Wesentlichen der inneren Form der Ringnut 24. Der Durchmesser des Loches 64 ist so bemessen, dass er zumindest im Wesentlichen dem Außendurchmesser des zylindrischen Nietabschnitts 14 entspricht oder eventuell geringfügig kleiner oder größer als dieser ist. Wenn das Loch 64 im Durchmesser etwas kleiner gewählt wird als der Nietabschnitt 14, so führt die gerundete Fläche 56 am freien Stirnende des Nietabschnitts 14 dazu, dass das Loch leicht gedehnt und kalibriert wird, wenn die Nietmutter durch das Loch hindurch geschoben wird, was erforderlich ist, um den Nietvorgang durchzuführen. Unterhalb des Blechteils 60 befindet sich in Fig. 2C eine Matrize 70 mit einem mittleren Vorsprung 72, der über einen konkaven Radius oder eine Schulter 74 in eine kreisförmige Fläche 76 übergeht, die geringfügig, beispielsweise um weniger als 0,2 mm, oberhalb der freien Stirnfläche 78 der Matrize steht. Der mittlere Formvorsprung 72 der Matrize 70 ist so bemessen, dass er mit der konusförmigen Fläche bzw. der gerundeten Fläche 58 des freien Stirnendes des Nietabschnitts zusammenwirkt, um beim Einnietvorgang den Nietabschnitt radial nach außen zu rollen bzw. umzulegen, um den Nietbördel 14' gemäß Fig. 2D auszubilden. Dieser Nietvorgang kann beispielsweise in an sich bekannter Weise in einer Presse, einem C-Gestell oder von einem Roboter vorgenommen werden.

Der eingenietete Zustand der Nietmutter ist aus den weiteren Figuren 2D-2F klar zu sehen. Im eingenieteten Zustand ist das Blechteil 60 im Bereich des Nietabschnitts mit einer Erhebung 62' vorgesehen, die zumindest im Wesentlichen an die Form der U-förmigen Nut 24 angepasst ist. Auf seiner der U-förmigen Nut abgewandten Seite weist das Blechteil 60' eine der Nutform ähnliche Ringvertiefung 80 auf, die aber kleiner ist als die U-förmige Ringnut 24. Der umgebördelte Nietabschnitt 14 liegt vollständig innerhalb der Ringvertiefung 80 und ragt nicht über die dem Gewindezylinder 16 abgewandte Seite des Blechteils hinaus. Die Oberseite des Blechteils liegt in der Ebene 20 außerhalb der Nietmutter, die als Fortsetzung der Ebene der ringförmigen Blechauflagefläche zu verstehen ist. Weiter weg von der Nietmutter 10 kann das Blechteil ohne weiteres eine besondere Formgebung haben, die von der Ebene 20 abweicht. Wichtig ist nur, dass in einem begrenzten Bereich radial außerhalb der Nietmutter 10 das Blechteil in der Ebene 20 liegt.

Mit einer Ausführung der Nietmutter können Bleche verschiedener Dicken verwendet werden, beispielsweise so, dass die Dicke des Blechteils 60 im Bereich zwischen 0,6 mm und 2,5 mm, vorzugsweise zwischen 0,6 mm und 1,5 mm liegt.

Das Volumen der U-förmigen Ringvertiefung 80 des Blechteils entspricht zumindest im Wesentlichen dem Volumen des umgebördelten Nietabschnitts.

Man sieht aus den Fig. 2E und 2F, dass die Verdrehsicherungsrippen 42 formschlüssig von oben in das Blechmaterial eingreifen, dieses aber nicht durchschneiden.

Ferner sieht man aus den Fig. 2E und 2F, dass der Rand 66' des Blechteils 60 im Bereich der Lochung 64, durch die sich der Nietabschnitt 14 erstreckt, verdickt bzw. wulstartig ausgebildet ist und der Nietbördel 14' mit einer entsprechenden, den verdickten Rand und diesen aufnehmende Ringvertiefung 82 auf der dem Gewindezylinder 16 zugewandten Seite versehen ist.

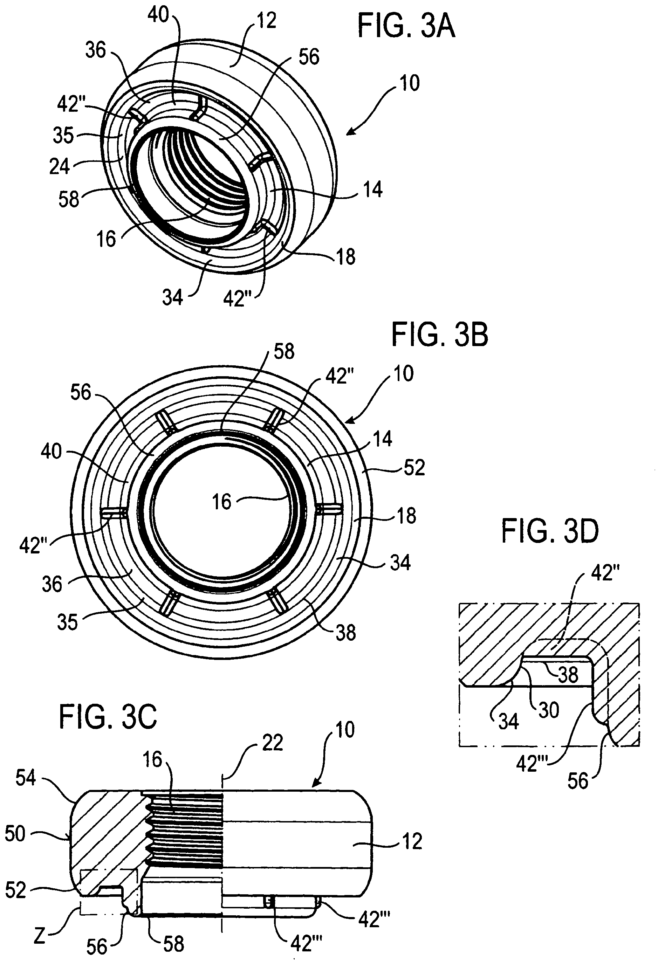

Die Fig. 3A-3D zeigen eine weitere erfindungsgemäße Nietmutter 10, die der Nietmutter der Fig. 1A-1D bzw. der Fig. 2A-2F sehr ähnlich ist. Aus diesem Grund werden Merkmale der Nietmutter gemäß Fig. 3A-3D, die mit denen der bisherigen Figuren übereinstimmen bzw. die gleiche Funktion haben, mit den gleichen Bezugszeichen versehen und es versteht sich, dass die bisherige Beschreibung auch für diese Merkmale gilt und nicht extra wiederholt werden muss.

Der wesentliche Unterschied zwischen der Ausführung gemäß Fig. 3A-3D und der bisherigen Ausführung liegt darin, dass die Verdrehsicherungsrippen 42 nicht nur im Bereich der Bodenfläche 36 der Ringnut 24 vorhanden sind, sondern sich auch erhaben am zylindrischen Nietabschnitt entlang erstrecken, wie bei 42" gezeigt. In diesem Beispiel erstrecken sich die Verdrehsicherungsrippen 42" unmittelbar zur Rundung 56 an der äußeren Seite des freien Stirnendes des Nietabschnitts 24.

Es ist aber ebenfalls denkbar, die Verdrehsicherungsrippen 42" nach der nicht veröffentlichten deutschen Anmeldung 102006000918.5 vom 5. Januar 2006 auszuführen, deren Offenbarung zu einem Teil der Offenbarung der vorliegenden Anmeldung gemacht wird.

Ferner kann der Bereich der Verdrehsicherungsrippen 42, der an der Bodenfläche 36 der Ringnut 24 vorgesehen ist, weggelassen werden, so dass Verdrehsicherungsrippen 42" nur am Nietabschnitt 14 vorgesehen sind.

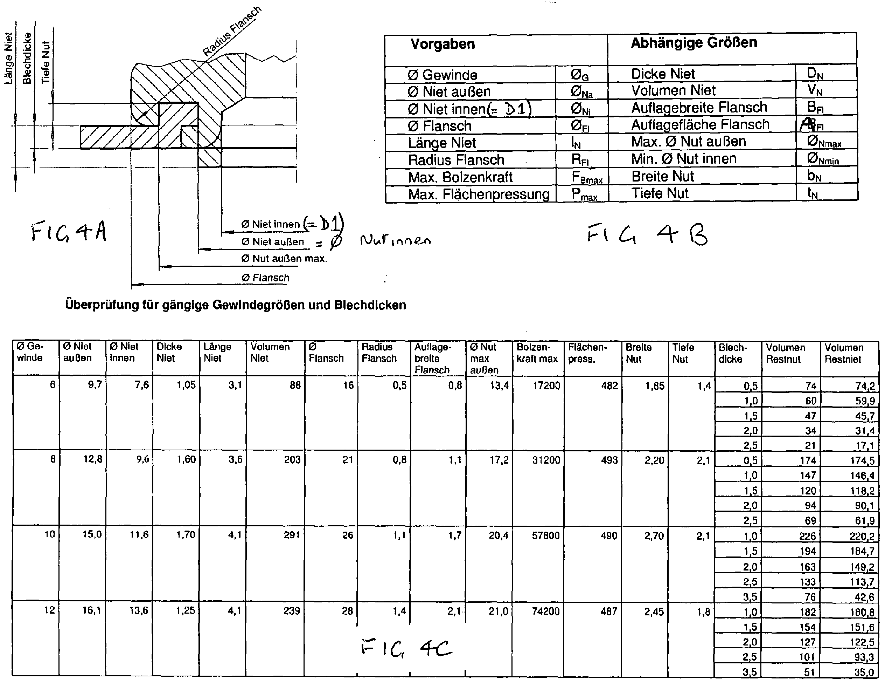

Bezug nehmend auf die Fig. 4A und 4B wird jetzt im Ansatz gezeigt, wie man den Querschnitt einer rechteckigen U-förmigen Nut berechnen kann, um die Forderung zu erfüllen, dass die Ringvertiefung 80 für einen Bereich von Blechdicken stets ein Volumen hat, das im Stande ist, das Volumen des umgebördelten Nietabschnitts aufzunehmen, wobei mit zunehmender Blechdicke das Volumen des umgebördelten Nietabschnitts abnimmt.

Fig. 4A zeigt in schematischer Form die Gestaltung des Elements im Bereich der Ringnut und die Tabelle gemäß Fig. 4B enthält die Definition der Abmessungen des Elements, die bei der Auslegung der rechteckigen Nut von Bedeutung sind.

Der Berechnungsgang ist wie folgt:

Aus vorgegebenen geometrischen Bedingungen ergibt sich:

$$\varnothing_{Nmax} = \varnothing_{Fl} - 2 \cdot B_{Fl} \tag{1}$$

Die Breite der Auflagefläche errechnet sich aus der von dieser Fläche maximal auszuübenden Flächenpressung in Abhängigkeit der maximalen Bolzenkraft, die nach DIN festgelegt ist:

$$A_{Fl} \geq \frac{F_{Bmax}}{P_{max}} \tag{2}$$

aus geometrischen Überlegungen kann man auch schreiben:

$$A_{Fl} = \frac{((\varnothing_{Fl} - 2 * R_{Fl})^2 - \varnothing_{Nmax}{}^2) * \pi}{4} \qquad (3)$$

aus (2) und (3) kann man nun den maximal zulässigen Außendurchmesser $\varnothing_{Nmax\,1}$ der Nut ableiten:

$$\varnothing_{Nmax} = \sqrt{(\varnothing_{Fl} - 2 * R_{Fl})^2 - \frac{4 * F_{Bmax}}{\pi * P_{max}}} \qquad (4)$$

Der minimal zulässige Innendurchmesser $\varnothing_{Nmin}$ ist gleich dem Außendurchmesser des Nietes:

$$\varnothing_{Nmin} = \varnothing_{Na} \qquad (5)$$

Unabhängig von der Blechstärke muss die Nut den gebördelten Niet aufnehmen. In erster Näherung kann damit das Volumen des Nietabschnittes mit dem der Nut gleichgesetzt werden:

$$V_N = \frac{(\varnothing_{Na}{}^2 - \varnothing_{Ni}{}^2) * \pi}{4} * l_N = \frac{(\varnothing_{Nmax}{}^2 - \varnothing_{Nmin}{}^2) * \pi}{4} * t_N \qquad (6)$$

Damit wird die Tiefe der Nut zu:

$$t_N = \frac{\varnothing_{Na}{}^2 - \varnothing_{Ni}{}^2}{\varnothing_{Nmax}{}^2 - \varnothing_{Nmin}{}^2} * l_N \qquad (7)$$

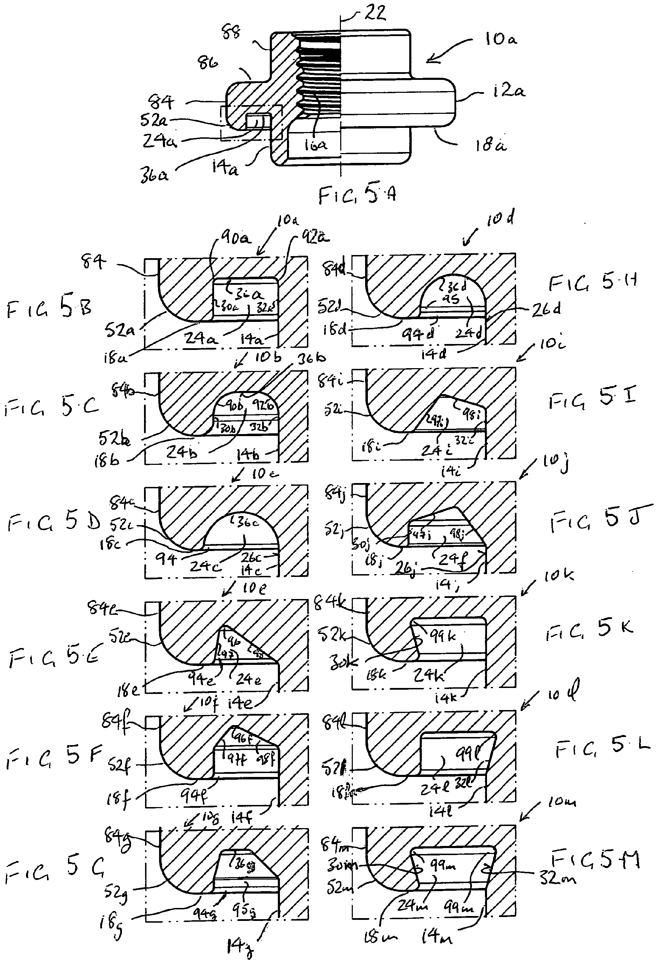

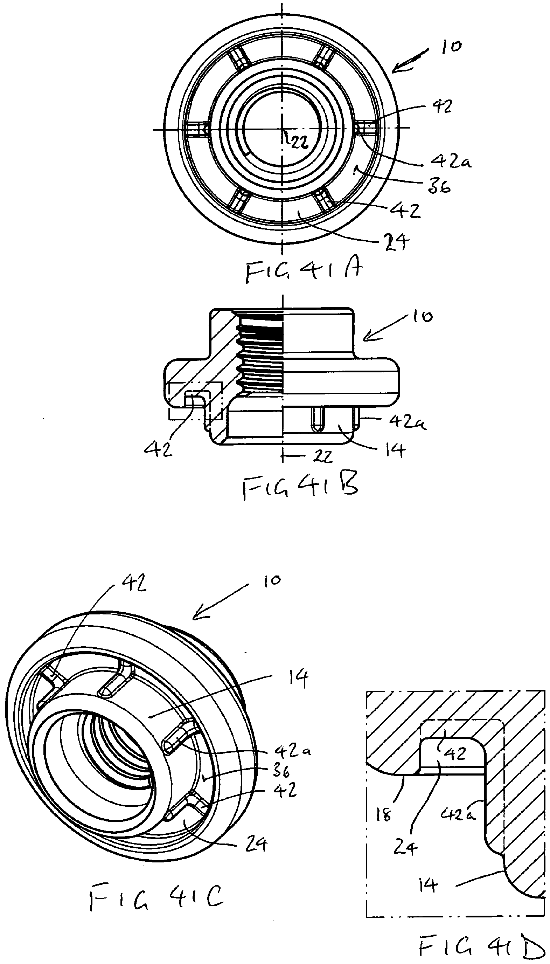

Die Überprüfung erfolgt für gängige Blechdicken anhand der tatsächlichen Gegebenheiten nach der Vernietung.
Die Tabelle der Fig. 4C zeigt dann die Übereinstimmung zwischen dem Volumen der Ringvertiefung "der Restnut" und dem berechneten Volumen des umgebördelten Teils des Nietabschnitts "des Restniets" für verschiedene Blechdicken. Man kann aus den letzten drei Spalten der Fig. 4C sehen, dass es gelingt, für verschiedene Gewindedurchmesser (linke Spalte der Fig. 4C) jeweils das Volumen des Restniets an das Volumen der Restnut anzupassen. Zur Tabelle der Fig. 4C ist im Übrigen darauf hinzuweisen, dass die Spalte "Bolzenkraft max" die Werte gemäß DIN für Schraubbolzen mit metrischem Gewinde in den Größen 6 mm, 8 mm, 10 mm und 12 mm angibt. Aus der benachbarten Spalte "Flächenpressung", sieht man, dass die Flächenpressung im Bereich des üblichen liegt. Dabei sind alle Abmessungen in mm angegeben und Volumen in mm³, die Bolzenkraft in Newton und die Flächenpressung in Newton/mm².
Die Tabelle gemäß Fig. 4C ist im Bezug auf die angegebenen Werte selbstredend und muss nicht weiter erläutert werden.
Diese Berechnung ignoriert allerdings das Volumen der vorgesehenen Verdrehsicherungsmerkmale. Diese können aber in eine verfeinerte Berechnung einfließen und können auch zum Teil so gewählt werden, dass eine bessere Anpassung des Volumens des Restniets an das Volumen der Restnut für eine Vielzahl von Blechdicken erfolgt.
Die oben erläuterte Berechnung gilt natürlich nur für eine Ringnut 24 mit einem streng rechteckigen Querschnitt. Es können aber ohne weiteres Korrekturen für etwaig vorhandene Radien oder von einem rechteckigen Querschnitt abweichende Querschnittsformen der Ringnut gemacht werden.
Es wurde bereits oben zum Ausdruck gebracht, dass die im Allgemeinen einen U-förmigen Querschnitt aufweisende Ringnut 24 verschiedene Freiheiten bei der Wahl der genauen Querschnittsform zulässt. Die Fig. 5A-5M geben Beispiele für die konkrete Wahl der U-Form.
Bei der Beschreibung der Fig. 5A bis 5M und der weiteren Figuren bis Fig. 41A bis 41D werden die gleichen Bezugszeichen verwendet wie im Zusammenhang mit den vorherigen Figuren, jedoch werden teilweise zur Unterscheidung die Bezugzeichen mit einem kleinen Buchstabe versehen. Es versteht sich, dass die bisherige Beschreibung auch für Teile bzw. Merkmale mit den gleichen Bezugszeichen mit oder ohne Bezugzeichen gilt, es sei denn, etwas Gegenteiliges wird gesagt. Neue Merkmale werden mit neuen Bezugzeichen versehen,

Fig. 5A zeigt ein Element 10a, das dem Element gemäß Fig. 1A sehr ähnlich ist, jedoch eine abgestufte Form des Körperteils 12a aufweist. Bei der konkreten Ausbildung des Elements gemäß Fig. 5A hat der Körperteil 12a einen die ringförmige Auflagefläche 18a aufweisende zylindrischen Abschnitt 84, der über eine sich in radialer Richtung erstreckende Ringschulter 86, die als Andrückschulter bei der Anbringung der Nietmutter dient, in einem Zylinderabschnitt 88 von im Vergleich zu dem genannten zylindrischen Abschnitt 84 kleineren Querabmessung. Dabei befindet sich der Gewindezylinder 16a teilweise im abgesetzten Zylinderabschnitt 88 kleinerer Querabmessung und teilweise im Körperteil 12a des Elements, erstreckt sich jedoch im Wesentlichen nicht über die Bodenfläche 36a der U-förmigen Nut 24a hinaus (was auch bei den Elementen der Fig. 1 bis 3 gilt). Die Querschnittsform der rechteckigen Nut 24a gemäß Fig. 5A ist zu einem großen Maßstab in Fig. 5B gezeigt. Man kann sehen, dass hier die Ringnut 24a eine U-Form aufweist, und dass gerundete Ecken 90a, 92a vorhanden sind, die einen relativ kleinen Radius haben, beispielsweise kleiner als ein Zehntel der axialen Tiefe ($t_N$, Fig. 4) der Ringnut 24a.

Es liegt hier also eine Querschnittsform vor, für die im Prinzip die Berechnung, die im Zusammenhang mit den Fig. 4A-4C erläutert wurde, gilt.

Eine Alternative hierzu ist in Fig. 5C gezeigt. Hier weist die Ringnut 24b eine U-Form auf mit dem Bodenbereich in einer Ebene senkrecht zur mittleren Längsachse 22 der Nietmutter und mit gerundeten Ecken 90b, 92b im Bereich des Übergangs des Bodenbereiches 36b in die Seitenwände der Ringnut 24b, wobei die gerundeten Ecken 90b, 92b einen relativ großen Radius, beispielsweise im Bereich zwischen zwei Drittel und einem Fünftel der axialen Tiefe ($t_N$, Fig. 4) der Ringnut 24b, aufweisen.

Dadurch, dass die gerundeten Ecken 90b, 92b größere Radien im Vergleich zu Fig. 5B haben, ist der Bereich der radial inneren Wand 32b und der radial äußeren Wand 30b, die parallel zur mittleren Längsachse 22 des Elements stehen, d.h. an der steilsten Stelle eine Neigung zur mittleren Längsachse der Nietmutter von 0° aufweist, deutlich kürzer als bei der Ausführungsform gemäß Fig. 5B.

Eine weitere alternative Querschnittsform ist in Fig. 5D gezeigt. Hier weist die Ringnut 24c eine U-Form auf, mit einem gekrümmten Bodenbereich 36c mit in etwa einer Kreisform, die sich jedoch über weniger als 180° erstreckt, beispielsweise im Bereich zwischen 180° und 150°, der entweder unmittelbar über einen kleinen Radius 94, beispielsweise im Bereich zwischen einem Fünftel und einem Zehntel der maximalen axialen Tiefe der Ringnut, in die ringförmige Auflagefläche 18c ausläuft und mehr oder weniger sanft in die zylindrische Außenfläche 26c des Nietabschnitts 14c übergeht oder über einen Geradeanteil (nicht gezeigt) und einen relativ kleinen Radius in die ringförmige Auflagefläche ausläuft und mehr oder weniger sanft in die zylindrische Außenfläche übergeht. Da der Winkel kleiner als 180° ist, hat die radiale äußere Seitenwand einen Winkel zur mittleren Längsachse der Nietmutter mit einem positiven Vorzeichen.

Alternativ hierzu kann die Ringnut 24d eine U-Form aufweisen, wie in Fig. 5H gezeigt, mit einem gekrümmten Bodenbereich 36d mit in etwa einer Kreisform, die sich jedoch über 180° oder mehr erstreckt, beispielsweise im Bereich zwischen 180° und 210°, der entweder unmittelbar über einen kleinen Radius 94d, beispielsweise im Bereich zwischen einem Fünftel und einem Zehntel der maximalen axialen Tiefe der Ringnut, in die ringförmige Auflagefläche ausläuft und mehr oder weniger sanft in die zylindrische Außenfläche des Nietabschnitts übergeht oder - wie gezeigt - über einen Geradeanteil 95 und einen relativ kleinen Radius in die ringförmige Auflagefläche ausläuft und mehr oder weniger sanft in die zylindrische Außenfläche 26d übergeht. Da der Winkel größer als 180° ist, hat die radiale äußere Seitenwand einen Winkel zur mittleren Längsachse der Nietmutter mit einem negativen Vorzeichen.

Als weitere Alternative kommt die Form gemäß Fig. 5E in Frage, wo die Ringnut eine zu einer V-Form tendierende Querschnittsform aufweist mit einem relativ kleinen oder relativ großen Radius 96 im Bodenbereich, der beispielsweise eine Größe weniger als die Hälfte der maximalen Tiefe ($t_N$, Fig. 4) der Ringnut 24e aufweist, wobei die radial äußere Seite 97 der Nut 24e einen steileren Winkel als deren radial inneren Seite 98 aufweist.

Die Möglichkeit besteht auch, eine Nutform entsprechend der Fig. 5E mit einer rechteckigen Nut sozusagen zu kombinieren, wodurch sich die Nutform gemäß Fig. 5F ergibt. Hier weist die Ringnut eine U-Form auf, wobei die radial äußere Seite 97f der Nut einen steileren Winkel als deren radial innere Seite 96f aufweist.

Als weitere mögliche Modifikationen (nicht gezeigt) könnte die radial innere Seite der Nut einen steileren Winkel als die radial äußere Seite aufweisen oder beide Seiten könnten zumindest im Wesentlichen die gleiche Neigung aufweisen. Auch kann die Bodenfläche der Nut, wie in Fig. 5G gezeigt, anstatt einer einfachen Rundung eine Fläche 36g aufweisen, die in einer Ebene verläuft, die senkrecht zu der mittleren Längsachse 22 des Elements steht.

Weitere Alternativen bestehen darin, wie in den Fig. 5I und 5J gezeigt, der Ringnut 24i bzw. 24j eine U-Form zu geben, die der U-Form gemäß Fig. 5F oder 5G ähnlich ist, wobei aber eine der radial inneren Seite 98j und der radial äußeren Seite 97j der U-Form unmittelbar (ausgenommen ein Radius wie 94i bzw. 94j) in die ringförmige Auflagefläche 18k bzw. in die zylindrische Fläche 26j des Nietabschnitts 14j übergeht.

Ferner besteht die Möglichkeit, wie in den Fig. 5K, 5L und 5M gezeigt, der Ringnut 24k, 24l bzw. 24m eine U-Form ähnlich der U-Form gemäß Fig. 5B oder 5C zu geben, wobei aber mindestens eine der radial inneren Seite 32l bzw. 32m und der radial äußeren Seite 30k bzw. 30m der U-Form eine Hinterschneidung 99k, 99l bzw. 99m bildet. Bei den Fig. 5K und 5M weist die entsprechende radial äußere Wand 30k bzw. 30m an der steilsten Stelle, d.h. über den gesamten geraden Anteil der radial äußeren Wand, einen Winkel zur mittleren Längsachse der Nietmutter mit negativem Vorzeichen, hier mit einem Winkel von etwa -15° auf.

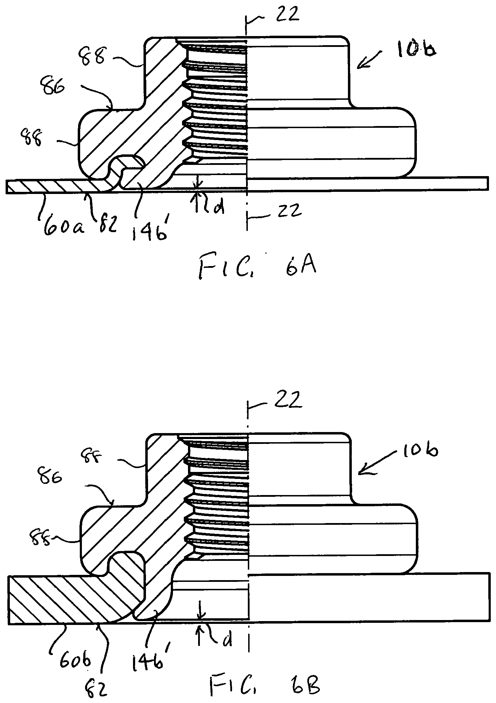

Die nachfolgenden Figuren 6A, 6B bis einschließlich 16A, 16B zeigen nun jeweils für ein dünnes Blech 60a und für ein dickes Blech 60b wie die Nietmutter/Blechverbindung sich für jede der Ausführungsformen der Fig. 5C bis 5M darstellt. Diese Zeichnungen sind Maßstab getreu und in dem Maßstab 4:1 gezeichnet, so dass es sich durchwegs um M8-Elemente handelt. Die Form der Ringnut gemäß Fig. 5A und 5B entspricht beinahe identisch der Form der Ringnut in Fig. 4A, weshalb eine entsprechende Darstellung für diese Ausführungsform nicht gezeigt wird.

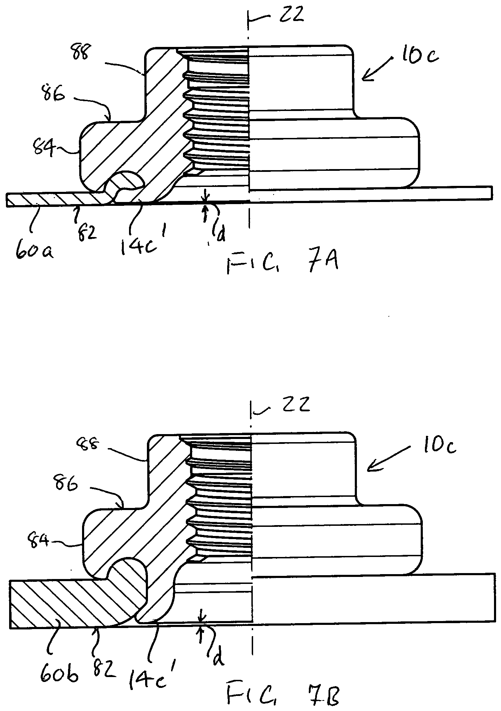

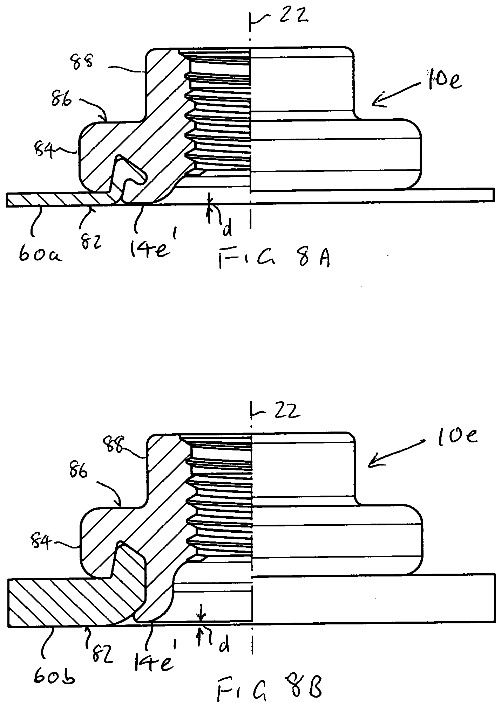

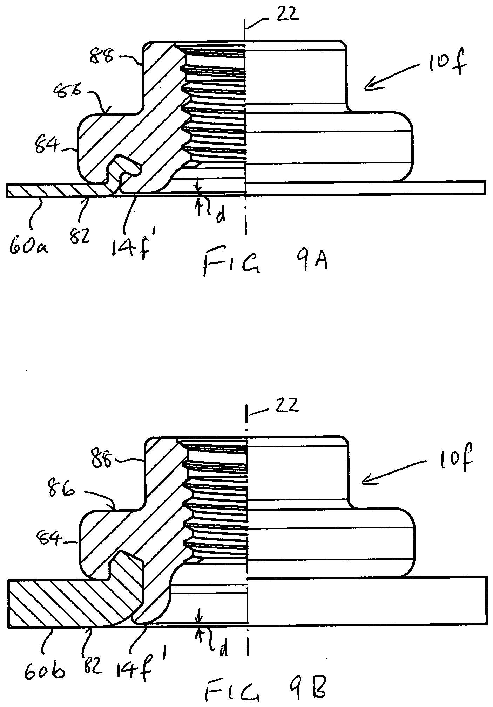

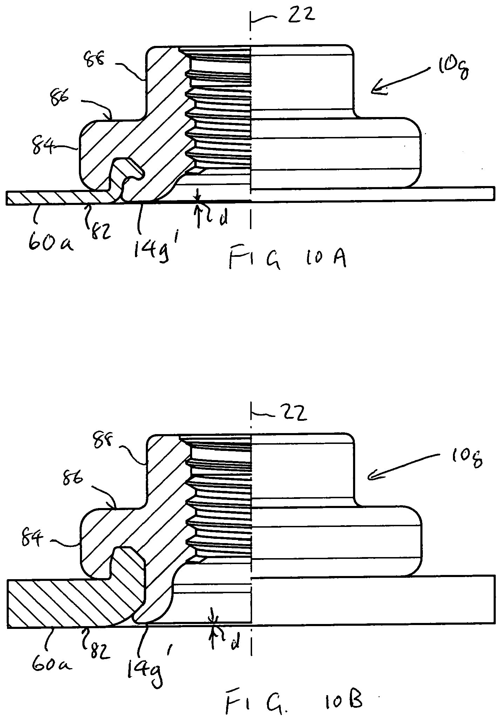

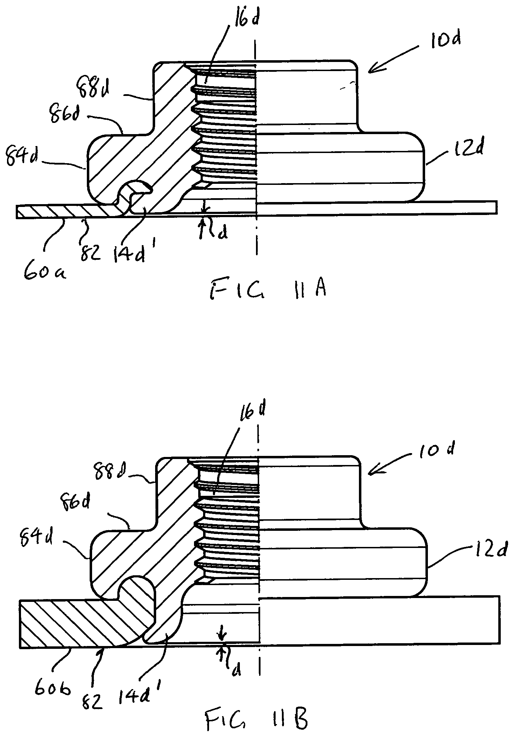

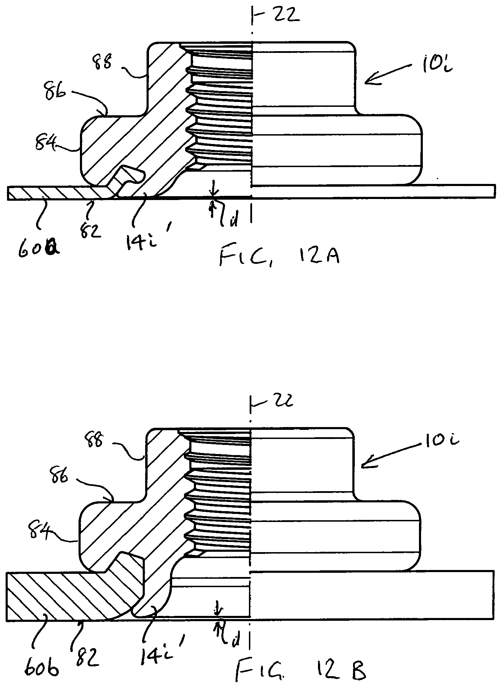

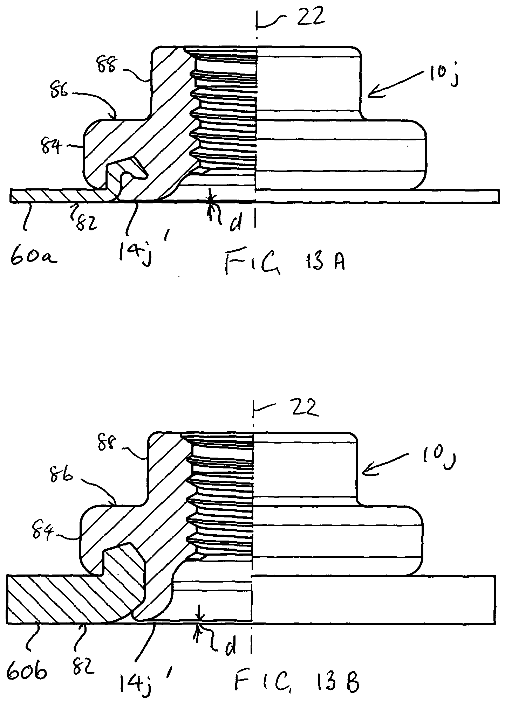

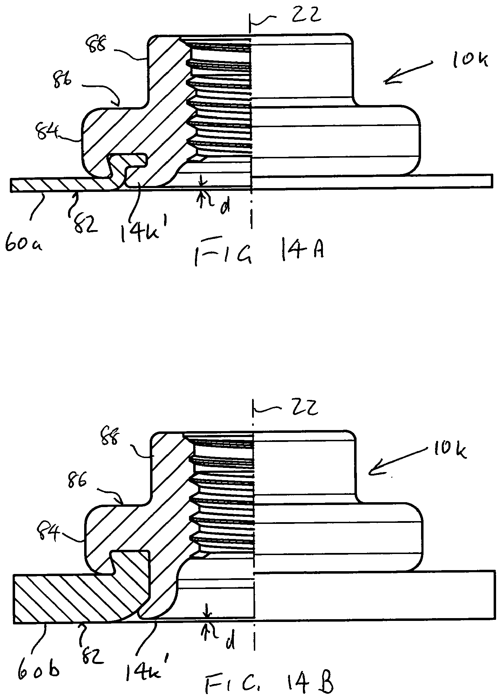

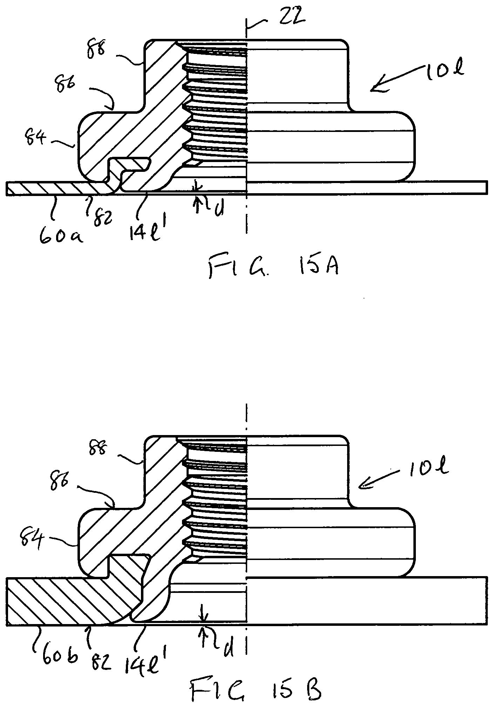

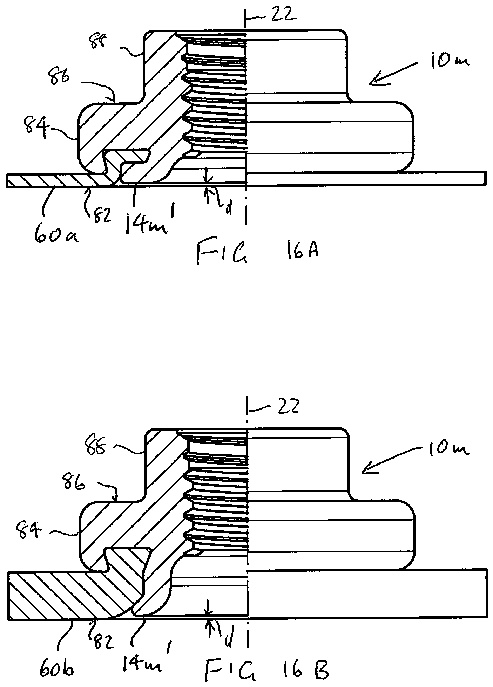

Aus den Fig. 6A, 6B bis 16A, 16B sieht man, dass es sowohl für dünne als auch für dicke Bleche stets gelingt, die Vernietung so vorzunehmen, dass der Nietbördel 14b' - 14m' zumindest im Wesentlichen bündig mit der unteren Seite 82 des Blechteils 60a, 60b im Bereich der ringförmigen Auflagefläche liegt bzw. leicht unterhalb dieser Blechoberfläche zurückversetzt ist, wobei ein Abstand d von etwa 0,2 mm zulässig ist, da in der Anschraubsituation ein solcher Abstand zwischen dem Zusammenbauteil (wie gezeigt) und dem angeschraubten Bauteil (nicht gezeigt) nicht stört, ja der direkten Klemmung im Bereich der ringförmigen Anlagefläche dienlich ist.

Ferner sieht man aus diesen Beispielen, dass die gewünschte direkte Klemmung stets erreicht werden kann und dass der Nietbördel stets im Stande ist, das in der U-förmigen Nut des jeweiligen Elements festgeklemmte Blechteil fest in Anlage gegen etwaige dort vorgesehene Verdrehsicherungsmerkmale (nicht gezeigt) zu halten.

Bei diesen Figuren ist die Zuordnung zu den Fig. 5C bis 5M wie folgt:

| | |
|---|---|
| Fig. 6A, 6B | Fig. 5C |
| Fig. 7A, 7B | Fig. 5D |
| Fig. 8A, 8B | Fig. 5E |
| Fig. 9A, 9B | Fig. 5F |
| Fig. 10A, 10B | Fig. 5G |
| Fig. 11A, 11B | Fig. 5H |
| Fig. 12A, 12B | Fig. 5I |
| Fig. 13A, 13B | Fig. 5J |
| Fig. 14A, 14B | Fig. 5k |
| Fig. 15A, 15B | Fig. 5L |
| Fig. 16A, 16B | Fig. 5M. |

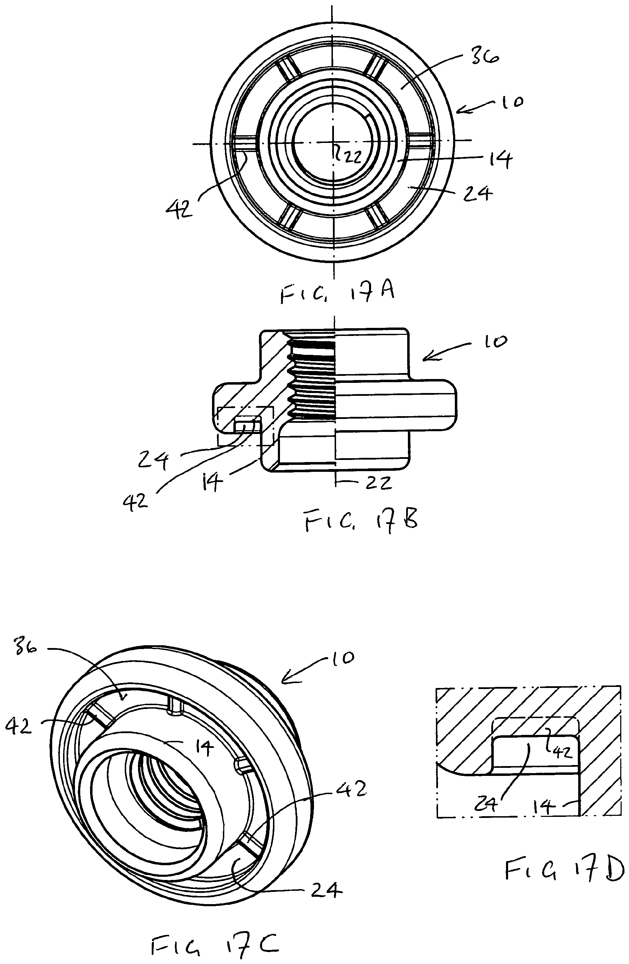

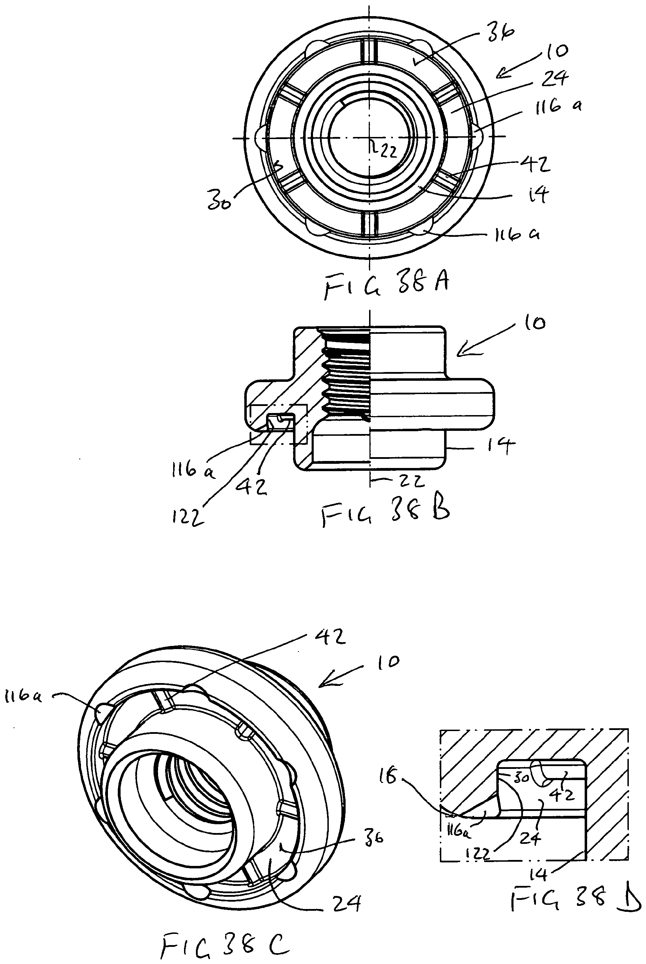

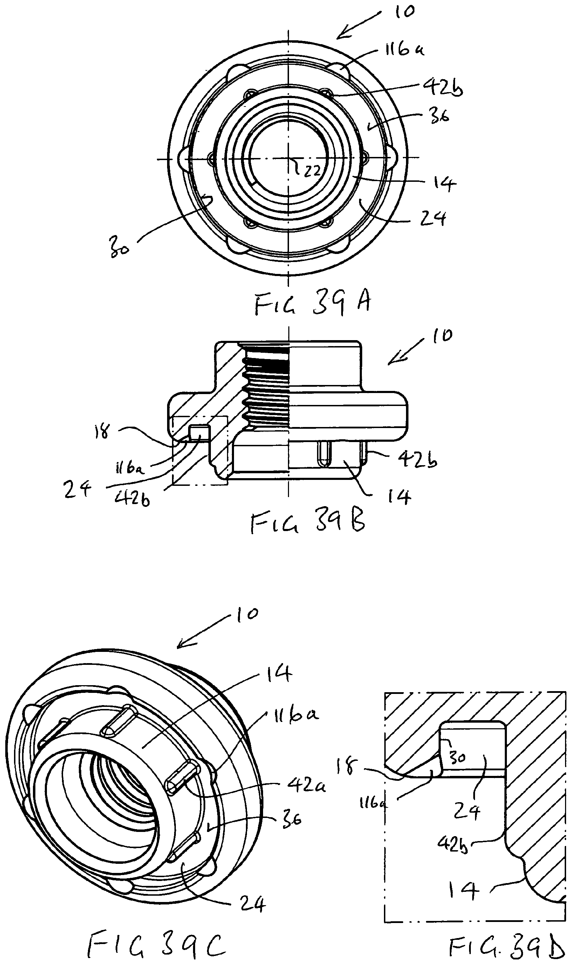

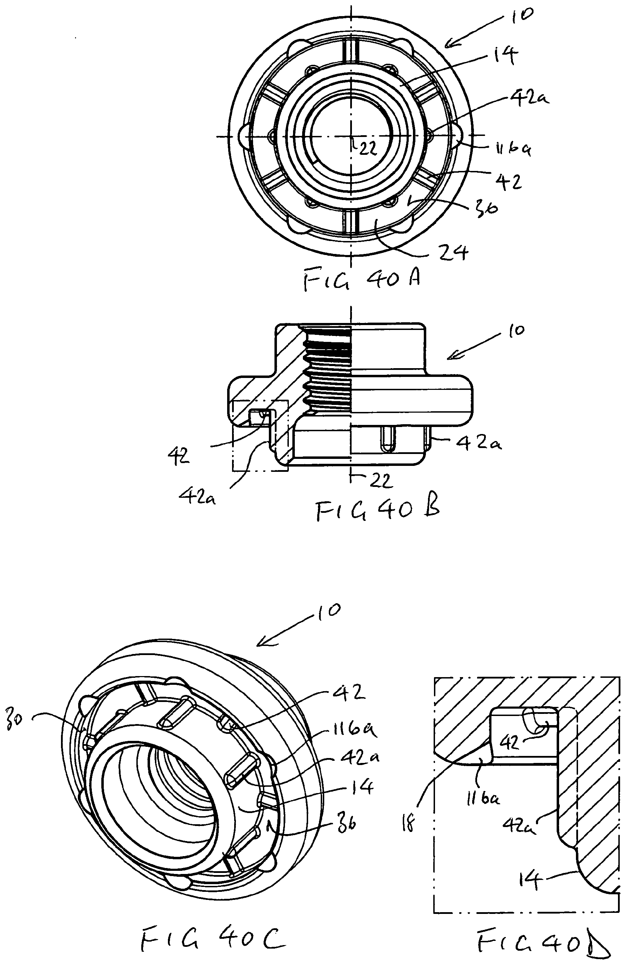

Die verwendeten Verdrehsicherungsmerkmale können auf die verschiedenste Art und Weise realisiert werden. Beispiele für die Verdrehsicherungsmerkmale sind den weiteren Figuren 17A, 17B, 17C, 17D bis 41A, 41B, 41C und 41D zu entnehmen. Dabei zeigt für jede Figurennummer die Darstellung A eine Draufsicht auf die Nietmutter in Richtung des Nietabschnitts 14 und der Ringnut 24 gesehen, die Darstellung B zeigt auf der rechten Seite der mittleren Längsachse 22 die Nietmutter 10 in Seitenansicht und auf der linken Seite der mittleren Längsachse 22 einen axialen Schnitt durch die Nietmutter, die Darstellung C zeigt eine perspektivische Darstellung der Nietmutter in einer Ansicht von der rechten Seite auf den zylindrischen Nietabschnitt und die Darstelldung D eine vergrößerte Darstellung des Bereiches der Ringnut entsprechend den mit einem rechteckigen Rahmen dargestellten Bereich der Darstellung B.

Die Fig. 17A bis 17D zeigen ein Element mit Verdrehsicherungsrippen 42, die sich in radialer Richtung über den Bodenbereich 36 der Ringnut 24 erstrecken und eine axiale Höhe aufweisen, die einen Bruchteil der maximalen axialen Tiefe der Ringnut 24 beträgt,

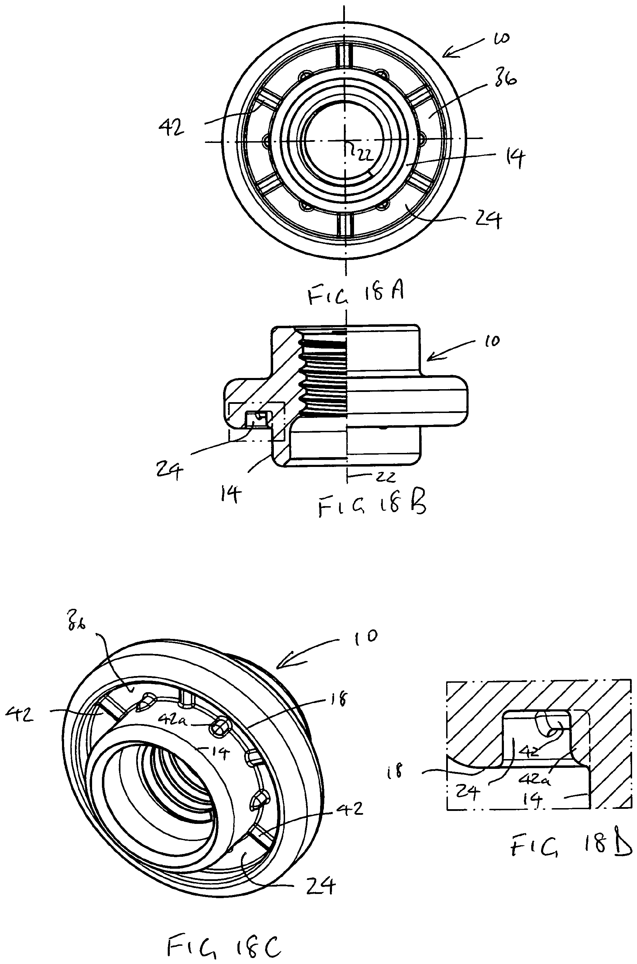

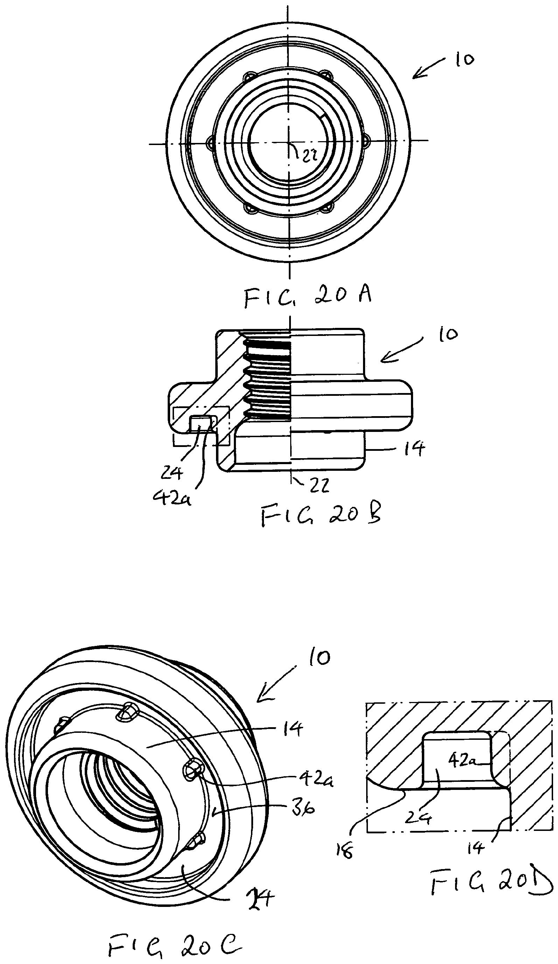

Die Fig. 18A bis 18D zeigen ein Element ähnlich den Fig. 17A bis 17D mit Verdrehsicherungsrippen 42, die an ihrer der Bodenfläche 36 der U-förmigen Ringnut abgewandten Seite in radialer Richtung verlaufen und in einer radialen Ebene liegen, die senkrecht zur mittleren Längsachse 22 der Nietmutter steht. Zusätzlich dazu sind winkelmäßig um die Längsachse 22 zu den Verdrehsicherungsrippen 42 versetzt angeordnete Verdrehsicherungsrippen 42a vorgesehen, die sich erhaben am zylindrischen Nietabschnitt 14 entlang erstrecken, und zwar in etwa bis zur axialen Höhe der ringförmigen Auflagefläche 18. Die Verdrehsicherungsrippen 42 könnten aber auch weggelassen werden wie in Fig. 20A bis 20D gezeigt, so dass lediglich die Verdrehsicherungsrippen 42a vorliegen.

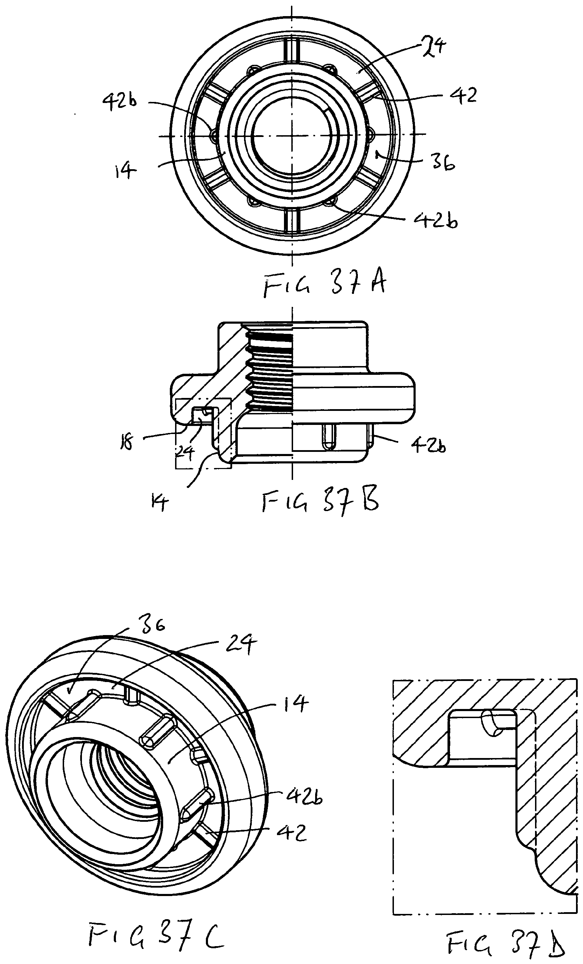

Bei der Ausführungsform gemäß Fig. 37A bis 37D sind Verdrehsicherungsrippen 42b vorgesehen, die sich erhaben am zylindrischen Nietabschnitt 14 entlang und über die axiale Höhe der ringförmigen Auflagefläche 18 hinaus erstrecken. Hier sind ebenfalls winkelmäßig versetzt angeordnete Verdrehsicherungsrippen 42 im Bereich der Bodenfläche 36 vorgesehen.

Die Fig. 41A bis 41D zeigen eine Anordnung der Verdrehsicherungsrippen 42, 42a, die der der Fig. 37A bis 37D sehr ähnlich ist, aber mit dem Unterschied, dass die Verdrehsicherungsrippen 42a sich hier mit den Verdrehsicherungsrippen 42 winkelmäßig um die Längsachse 22 ausgerichtet und einstückig mit diesen ausgebildet sind. Sie erstrecken sich ebenfalls über die gesamte Länge des Nietabschnitts 14 bis zu der Rundung am freien Stirnende des Nietabschnitts 14. Die Verdrehsicherungsrippen 42, 42b haben in Seitenansicht eine rechtwinklige Form.

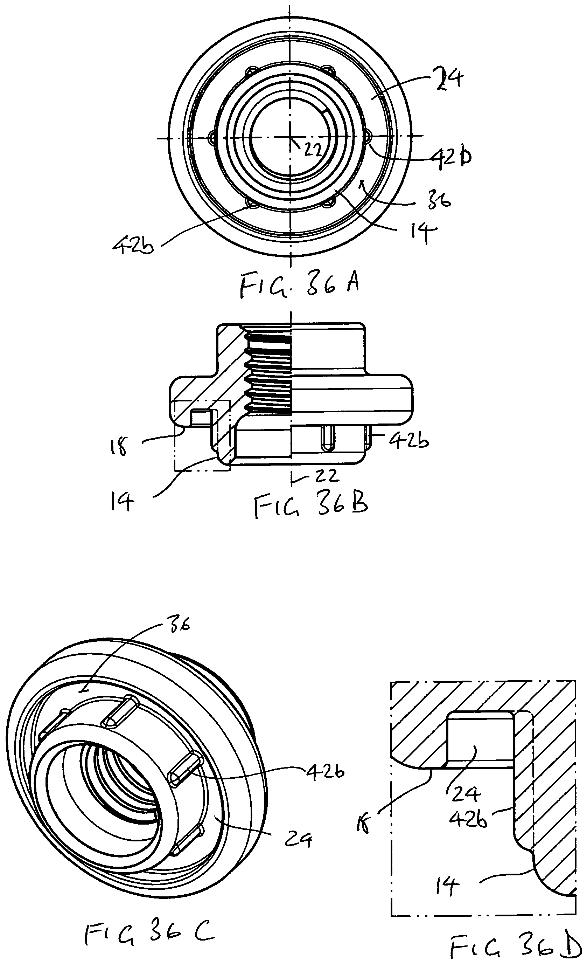

Auch die Ausführungsform gemäß Fig. 36A bis 37D weist Verdrehsicherungsrippen 42b auf, die sich erhaben am zylindrischen Nietabschnitt 14 entlang und über die axiale Höhe der ringförmigen Auflagefläche hinaus erstrecken und unmittelbar vor einer Rundung 56 am freien Ende des Nietabschnitts 14 auslaufen. Hier sind aber keine Verdrehsicherungsrippen im Bereich der Bodenfläche 36 vorgesehen.

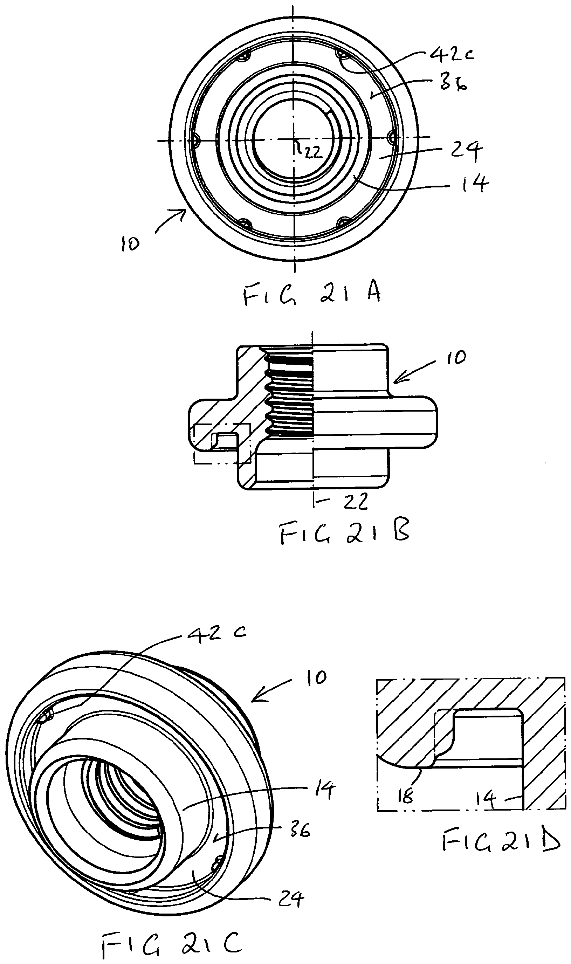

Ferner besteht die Möglichkeit, wie in den Fig. 21A bis 21D gezeigt, Verdrehsicherungsrippen 42c vorzusehen, die sich erhaben an der radial äußeren Seite der Ringnut 24 entlang erstrecken, und zwar ohne Verdrehsicherungsrippen im Bereich der Bodenfläche 36.

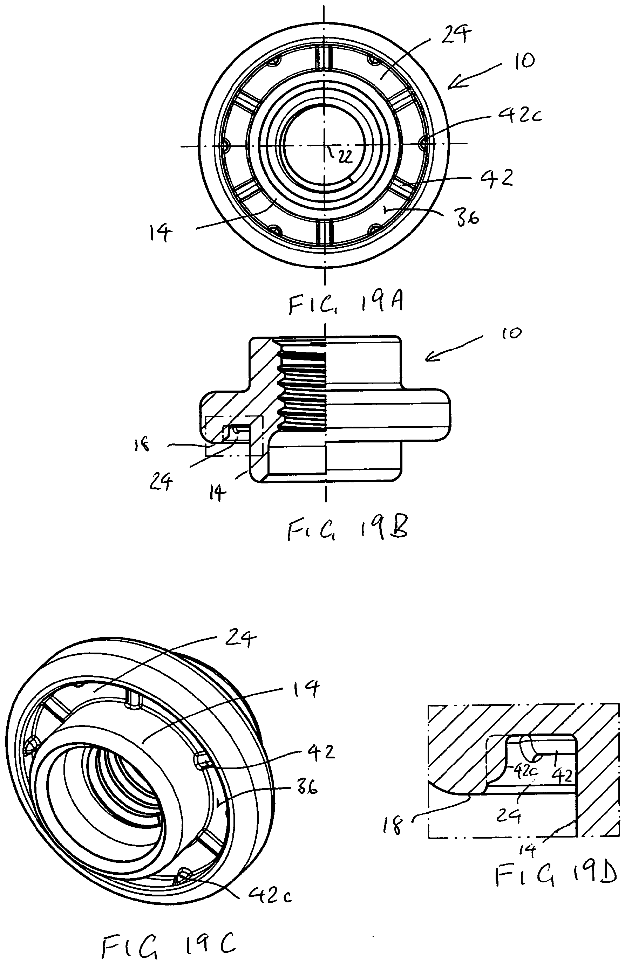

Es wäre auch denkbar, wie in den Fig. 19A bis 19D gezeigt, solche Verdrehsicherungsrippen 42c gemäß den Fig. 21A bis 21D mit Verdrehsicherungsrippen 42 zu ergänzen, die an der Bodenfläche 36 vorgesehen sind und winkelmäßig um die Längsachse 22 zu den Verdrehsicherungsrippen 42c versetzt angeordnet sind.

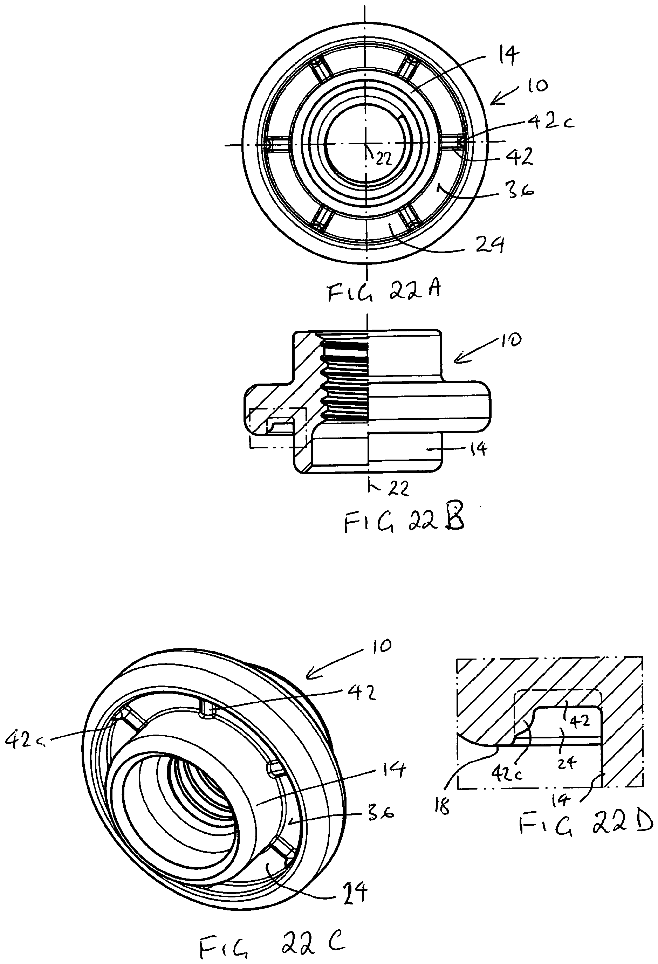

Außerdem könnten, wie in den Fig. 22A bis 22C gezeigt, die Verdrehsicherungsrippen 42c mit den Verdrehsicherungsrippen 42 winkelmäßig ausgerichtet sein und ineinander übergehen, beispielsweise so, dass die einzelnen Verdrehsicherungsrippen 42, 42c insgesamt in Seitenansicht eine rechtwinklige Form aufweisen.

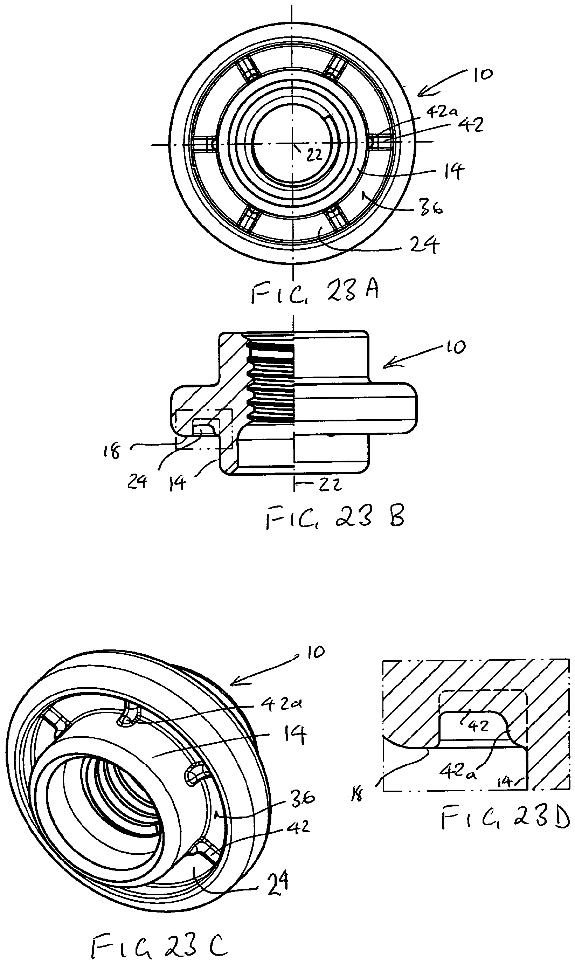

Eine andere rechtwinklige Form der Verdrehsicherungsrippen ist in den Fig. 23A bis 23D gezeigt. Hier werden Verdrehsicherungsrippen 42 im Bereich der Bodenfläche 36 der Ringnut 24 mit winkelmäßig damit ausgerichteten Verdrehsicherungsrippen 42a kombiniert, die sich am Nietabschnitt 14 befinden, um Verdrehsicherungsrippen mit einer rechtwinkligen Form zu bilden.

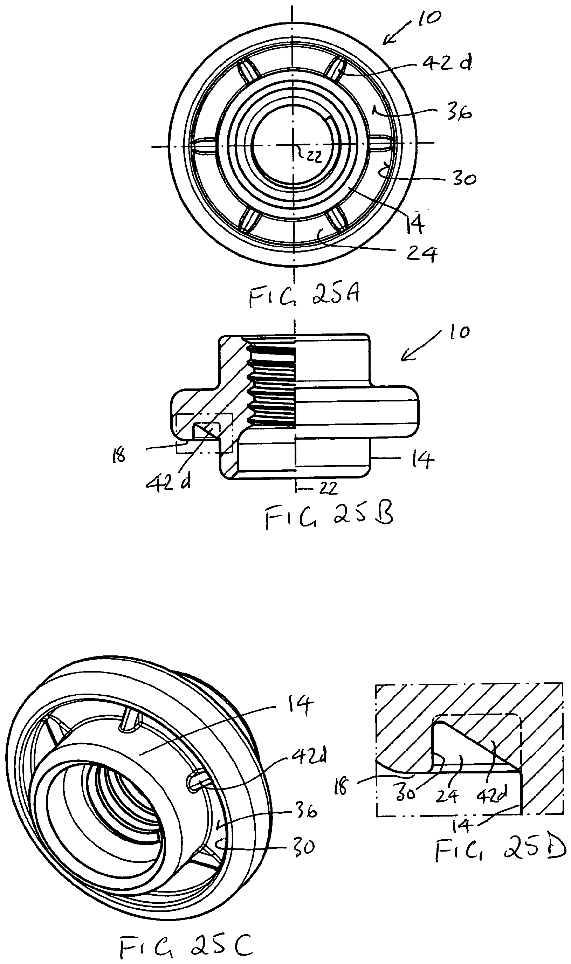

Die Fig. 25A bis 25D zeigen Verdrehsicherungsrippen 42d, die sich in radialer Richtung im Bodenbereich 36 der Ringnut 24 erstrecken und in Seitenansicht eine zumindest im Wesentlichen dreieckige Form aufweisen. Im Bereich des Nietabschnitts 14 sind sie höher als im Bereich der radial äußeren Seite 30 der Ringnut 24.

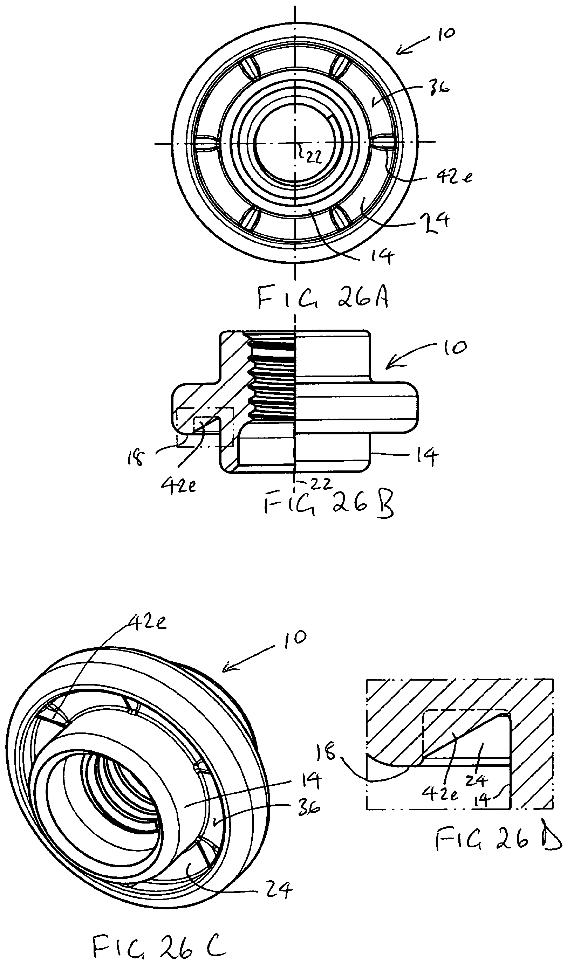

Auch die umgekehrte Anordnung ist möglich, nämlich wie in den Fig. 26A bis 26B gezeigt, mit Verdrehsicherungsrippen 42e, die sich in radialer Richtung im Bodenbereich 36 der Ringnut 24 erstrecken und in Seitenansicht eine zumindest im Wesentlichen dreieckige Form aufweisen und im Bereich der radial äußeren Seite 30 der Ringnut höher sind als im Bereich des Nietabschnitts 14.

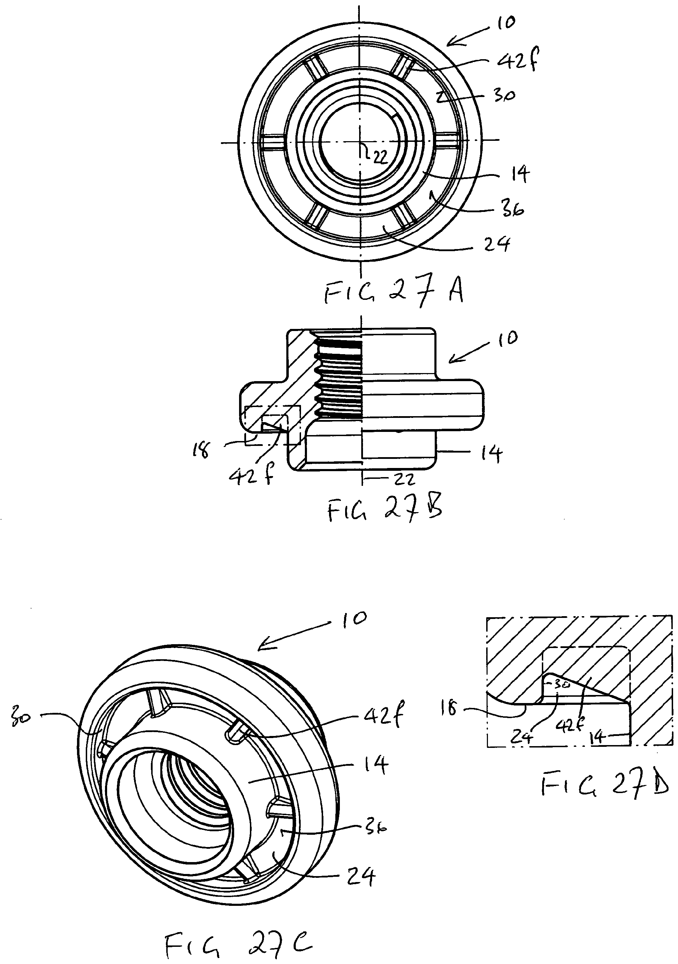

Eine weitere Modifikation der Verdrehsicherungsrippen 42d gemäß Fig. 25A bis 25D ist auch möglich, nämlich wie in den Fig. 27A bis 27B gezeigt, mit Verdrehsicherungsrippen 42f, die sich in radialer Richtung im Bodenbereich der Ringnut erstrecken und in Seitenansicht eine zumindest im Wesentlichen vierseitige Form aufweisen, deren von der Bodenfläche 36 abgewandte Seite einen schrägen Verlauf aufweist und deren radial innere am Nietabschnitt 14 gelegene Seite höher ist als deren im Bereich der radial äußeren Seite 30 der Ringnut 24 gelegene Seite.

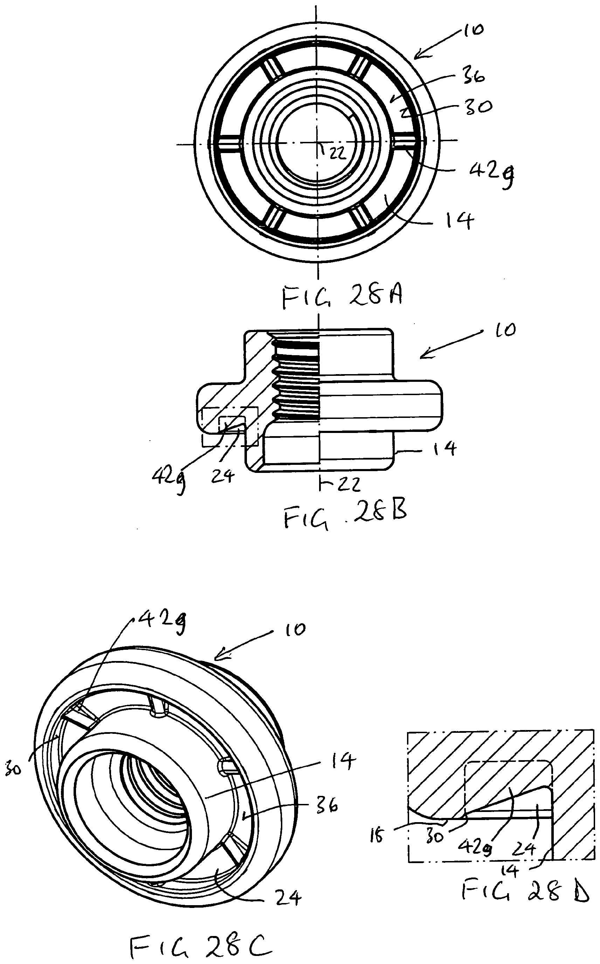

Auch diese Anordnung kann abgewandelt werden, wie in den Fig. 28A bis 28D gezeigt. Hier sind Verdrehsicherungsrippen 42g vorgesehen, die sich in radialer Richtung im Bodenbereich 36 der Ringnut 24 erstrecken und in Seitenansicht eine zumindest im Wesentlichen vierseitige Form aufweisen, deren von der Bodenfläche 36 abgewandte Seite einen schrägen Verlauf aufweist und deren im Bereich der radial äußeren Seite 30 der Ringnut gelegene Seite höher ist als deren radial innere am Nietabschnitt gelegene Seite.

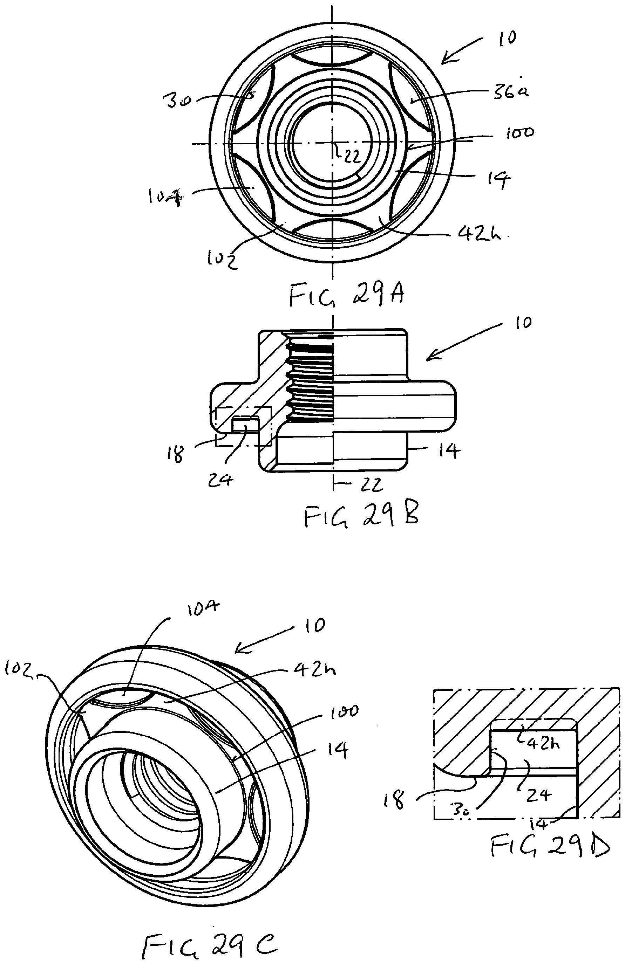

Die Verdrehsicherung kann aber auch so realisiert werden, wie in den Fig. 29A bis 29D gezeigt, nämlich in Form einer Verdrehsicherungserhöhung 42h im Bodenbereich der Ringnut 24, die in Draufsicht eine in etwa sternförmige Gestalt mit einem inneren Loch 100 aufweist, das an den zylindrischen Nietabschnitt 14 anschließt, wobei die Spitzen 102 der sternförmigen Gestalt an der radial äußeren Seite 30 der Ringnut 24 gelegen sind. Es bilden sich Vertiefungen bzw. Taschen 104 im Bodenflächenbereich 36a zwischen den Spitzen 102. Blechmaterial, das in die Taschen 104 eingedrückt wird, stößt gegen die Seitenwände der Taschen und verhindert somit ein Drehen der Nietmutter relativ zum Blechteil.

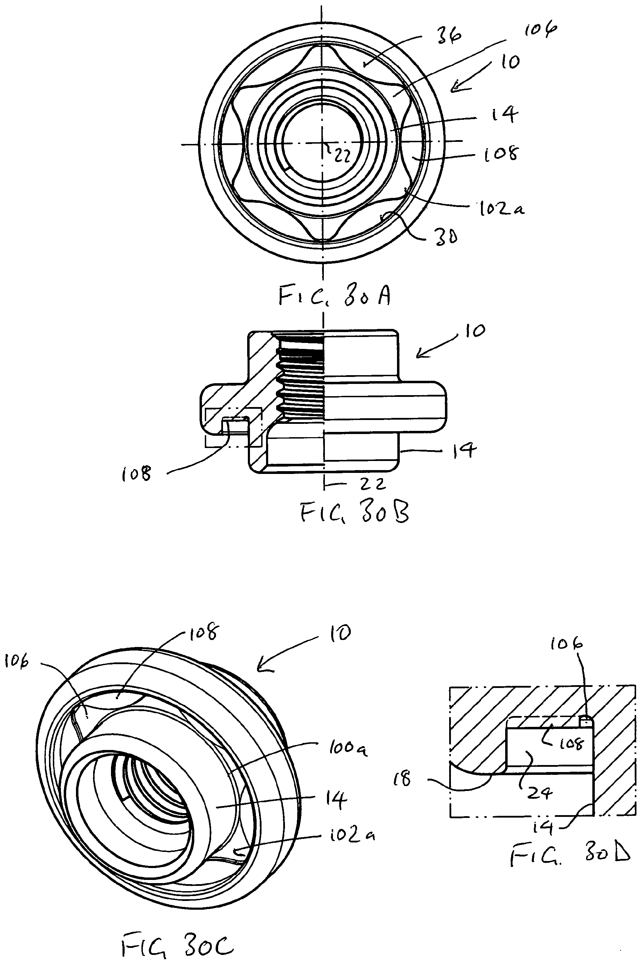

Eine Verdrehsicherungsvertiefung 106 könnte, wie in den Fig. 30A bis 30D gezeigt, im Bodenbereich 36 der Ringnut 14 vorgesehen werden, die in Draufsicht eine in etwa sternförmige Gestalt mit einem inneren Loch 100a aufweist, das an den zylindrischen Nietabschnitt anschließt, wobei die Spitzen 102a der sternförmigen Gestalt an der radial äußeren Seite 30 der Ringnut 14 gelegen sind. Hier liegen Erhöhungen 108 zwischen den Spitzen 102a vor, dessen Seitenwände, wie bei der Ausführung gemäß Fig. 29A bis 29D, ein Drehen der Nietmutter relativ zum Blechteil verhindern.

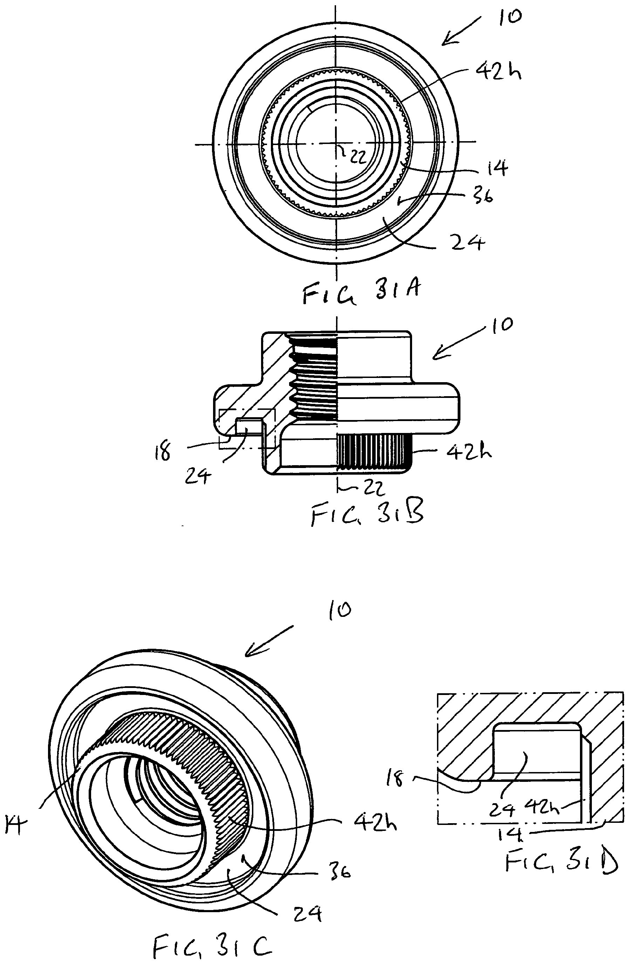

Ferner kann entsprechend den Fig. 31A bis 31D eine Verdrehsicherung in Form einer gerändelten Außenseite 42h des Nietabschnitts 14 vorgesehen werden.

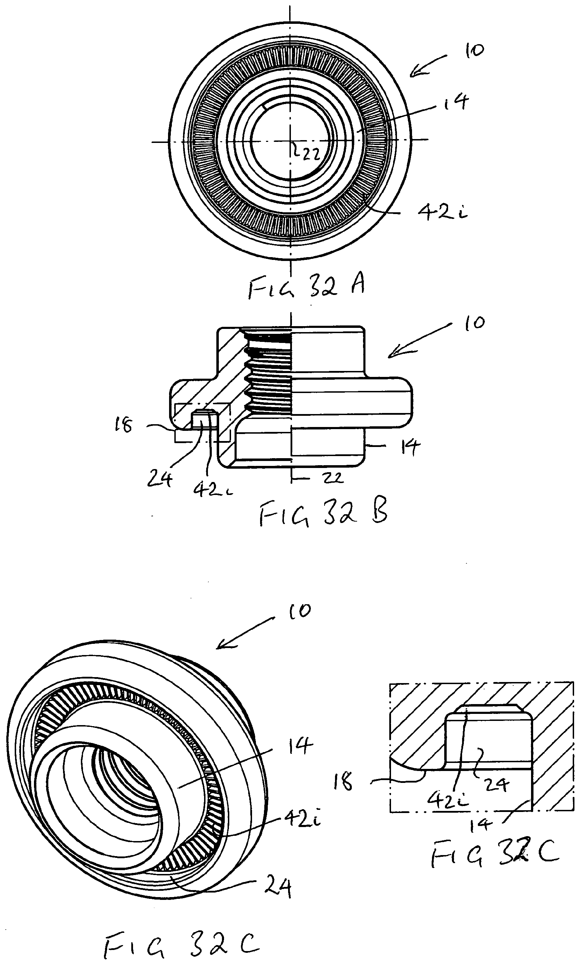

Alternativ oder ergänzend hierzu kann gemäß Fig. 32A bis 32D eine Bodenfläche 36 der Ringnut 14 mit einer einer Stirnverzahnung entsprechenden Ausbildung 42i versehen werden.

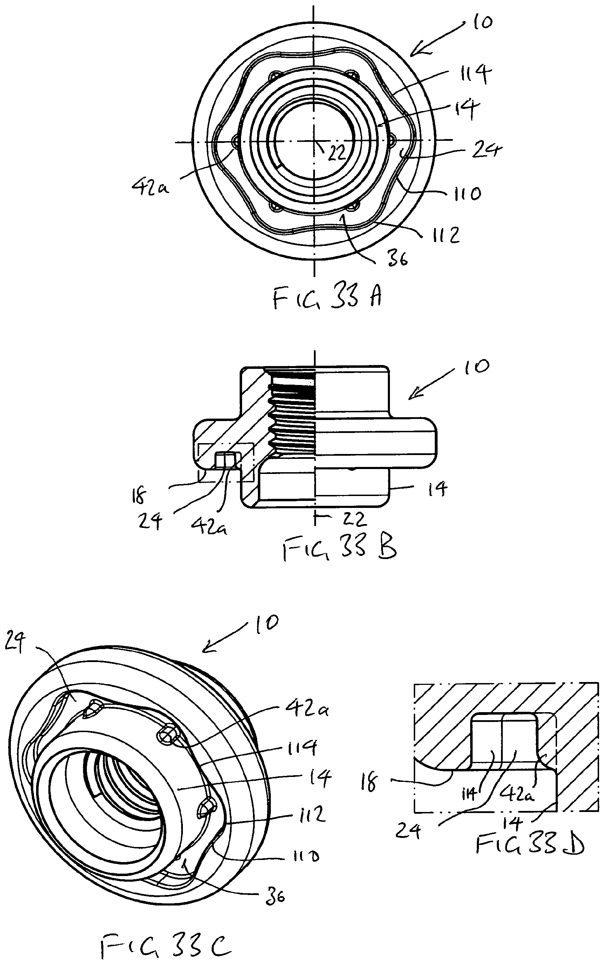

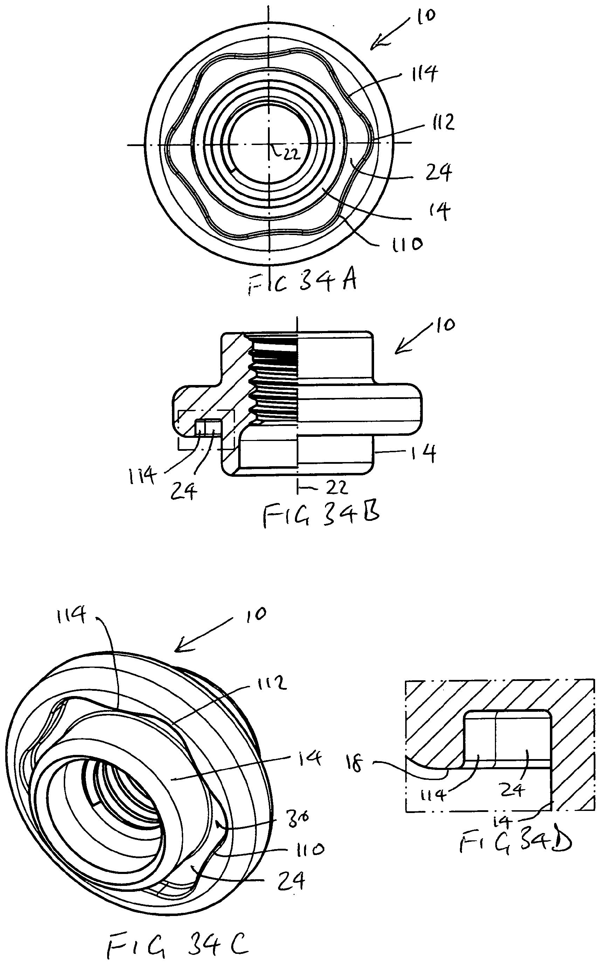

In Frage käme auch ein gewellter Verlauf 110 der radial äußeren Seite der Ringnut 14, wie in den Fig. 33A bis 33D gezeigt, deren sanft gerundete Berge 112 und Täler 114 eine Verdrehsicherung bilden. Diese Form kann gegebenenfalls durch weitere Verdrehsicherungsmerkmale wie die Verdrehsicherungsrippen 42a ergänzt werden. Solche Verdrehsicherungsrippen 42a können auch weggelassen werden, wodurch sich die Ausbildung gemäß Fig. 34A bis 34D ergibt.

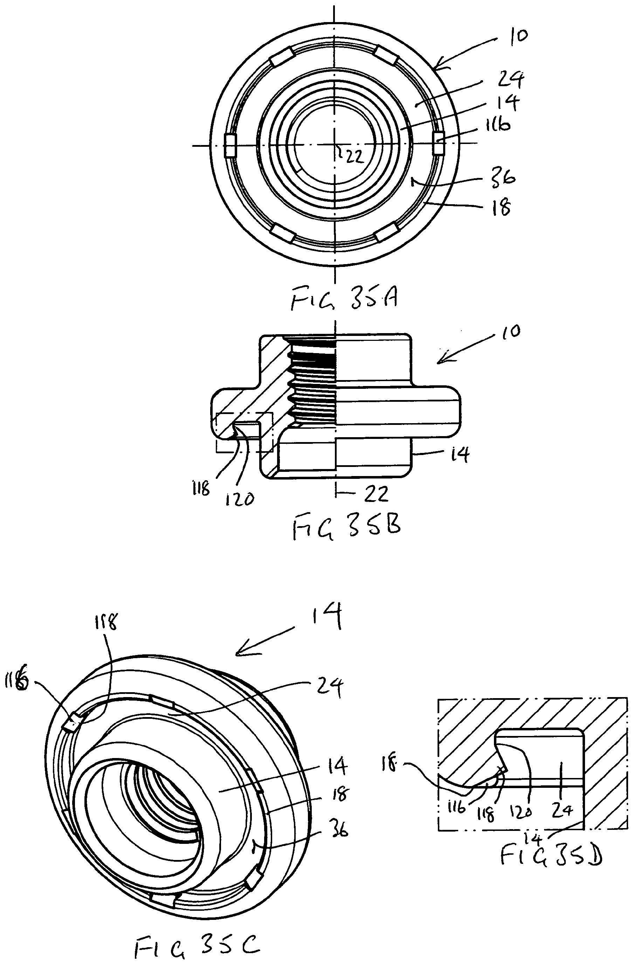

Bei der Ausführungsform gemäß den Fig. 35A bis 35D ist die Verdrehsicherung durch sich radial erstreckende Vertiefungen 116 in der ringförmigen Auflagefläche 18 vorgesehen, die sich vorzugsweise nicht über die volle Breite dieser erstrecken und ihre tiefste Stellung benachbart zur Ringnut 14 aufweisen und an der radial äußeren Seitenwand der Ringnut Vorsprünge 118 mit Hinterschneidungen 120 bilden.

Alternativ hierzu können entsprechend den Fig. 38A bis 38D sich radial erstreckende Vertiefungen 116a in der ringförmigen Auflagefläche 18 vorgesehen werden, die eine teilzylindrische Querschnittsform aufweisen und schräg gestellt sind, so dass sie ihre tiefste Stellung benachbart zur Ringnut 24 aufweisen und eine hinterschnittene Ringform 122 der radial äußeren Seitenwand 30 der Ringnut 24 unterbrechen. Diese Verdrehsicherungsmerkmale können durch Verdrehsicherungsrippen 42 gemäß den Fig. 38A bis 38D oder durch axiale Verdrehsicherungsrippen 42b gemäß den Fig. 39A bis 39B oder gemäß den Fig. 40A bis 40D durch Verdrehsicherungsrippen 42 und 42b ergänzt werden.

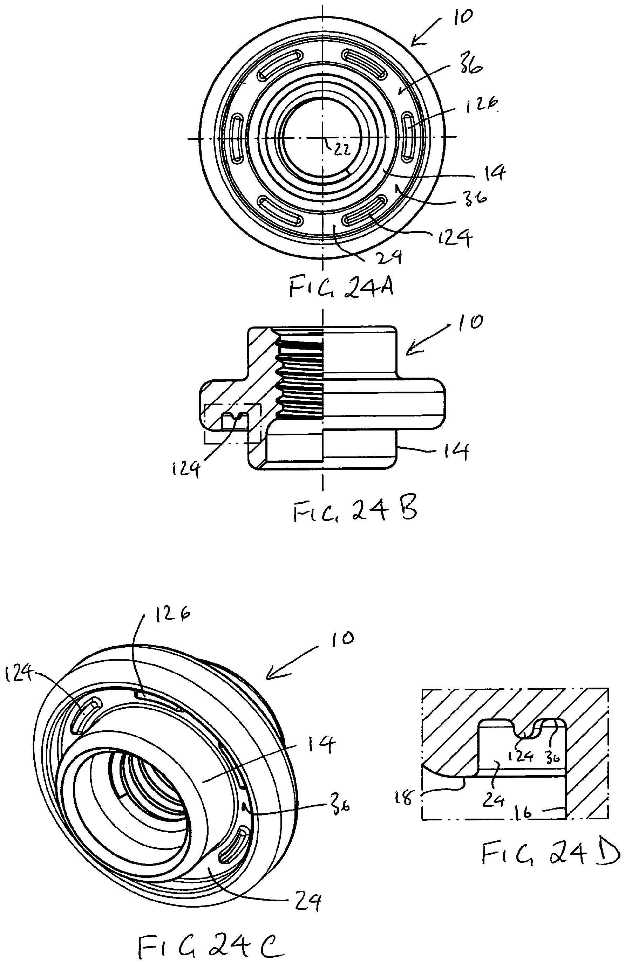

Auch kämen gemäß Fig. 24A bis 2D sich abwechselnde bogenförmig verlaufende Erhebungen 124 und Vertiefungen 126 an bzw. in der Bodenfläche 36 der Ringnut 24 in Frage. Es können aber auch nur bogenförmige Erhebungen 124 oder nur bogenförmige Vertiefungen 126 vorgesehen werden.

Im Falle von diskreten Verdrehsicherungsmerkmalen wie 42a, 42b, 42, 124, 126, 42c, 116a an der radial inneren Seite 32 der Ringnut 24, d.h. an der zylindrischen Außenfläche des Nietabschnitts 14, an der Bodenfläche 36 der Ringnut 24 oder an der radialen äußeren Seite 30 der Ringnut oder an der ringförmigen Auflagefläche 18 können diese miteinander in radialer Richtung fluchten oder winkelmäßig in Bezug auf die mittlere Längsachse gegeneinander versetzt sind oder im Falle von zwei oder mehr der genannten Möglichkeiten teilweise miteinander in radialer Richtung fluchten und winkelmäßig in Bezug auf die mittlere Längsachse gegeneinander versetzt sind. Beispiele hierfür sind den Fig. 18A bis 18D, 19A bis 19D, 37A bis 37D, 38A bis 38D, 39A bis 39D und 40A bis 40D zu entnehmen.

Selbstverständlich kämen auch andere Verdrehsicherungsmerkmale oder Kombinationen der angegebenen Verdrehsicherungsmerkmale miteinander oder mit anderen Verdrehsicherungsmerkmalen in Frage.

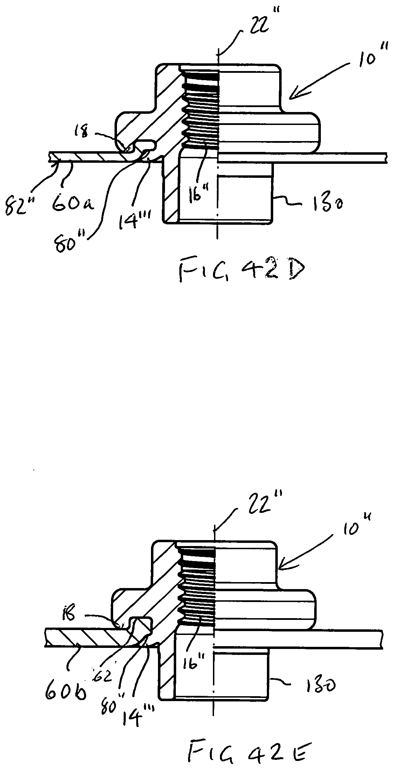

Die Fig. 42A bis 42E zeigen, dass die vorliegenden Erfindung auch mit einer Nietmutter in Form eines so genannten Rockelements 10" verwendet werden kann, bei dem der Nietabschnitt 14" als Rock um einen mittig angeordneten Stanzabschnitt 130 vorgesehen ist. Das Prinzip solcher Rockmuttern ist beispielsweise in der PCT-Anmeldung PCT/EP2003/007436, die als WO 2004/034520 veröffentlicht wurde, beschrieben. Dort allerdings in Kombination mit einem Element mit einer konusförmigen Anlagefläche und nicht in Kombination mit einem Element mit einer Ringnut wie hier vorgeschlagen. Das Prinzip der Umbördelung des rockförmigen Nietabschnitts 14" ist aber das gleiche, nur mit dem Unterschied, dass bei der vorliegenden Ausführungsform der Nietbördel 14"', die aus dem rockförmigen Nietabschnitt 14" hergestellt wird, hier in einer Ringvertiefung 80" des Blechteils 60a bzw. 60b (Fig. 42D bzw. 42E) zu liegen kommt, so dass eine vollständige plane Unterseite im Bereich des Nietbördels erreicht wird, d.h. die freie Fläche des Nietbördels liegt bündig mit der Unterseite 82" des Blechteils oder ist eventuell bis 0,2 mm gegenüber dieser freien Fläche zurückversetzt. Zwar ragt der Stanzabschnitt 130 durch das Blechteil hindurch, dies kann aber vorteilhaft sein, beispielsweise wenn das Element eine Zentrierfunktion haben sollte. Wichtig ist, dass beim Vorsehen eines entsprechenden Loches im weiteren Bauteil, das an das Zusammenbauteil gemäß Fig. 42D bzw. 42E angebracht wird, die direkte Klemmung zwischen dem weiteren Bauteil und der ringförmigen Auflagefläche 18" der Nietmutter erfolgt, und dass durch die Anpassung der Volumina der Ringvertiefung 80 im Blechteil und des umgelegten Volumens des Ringniets eine kompressive Spannung im Blechteil entsteht, wie bei allen anderen Ausführungsformen, was zu einem erheblichen Würgegriff zwischen dem Blechteil und dem Element führt.

Die besondere Form der Sicke im Blechteil, so dass diese die Ringnut 24" zumindest im Wesentlichen ausfüllt, kann bei der selbststanzenden Einbringung des Elements realisiert werden, vorausgesetzt die Matrize ist so ausgelegt, dass die Zusammenbausituation gemäß Fig. 42D bzw. 42E erreicht wird. Es ist aber nicht zwingend erforderlich, das Element gemäß Fig. 42A bis 42C selbststanzend in das Blechteil einzubringen, sondern das Blech könnte wie bei den bisherigen Ausführungsformen vorgesickt und vorgelocht sein.

Bei dieser Ausführungsform ist es im Übrigen nicht zwingend erforderlich, dass ein Gewindezylinder 16" vorhanden ist. Stattdessen könnte das Element mit einer durchgehenden Bohrung versehen werden, die dann beispielsweise zur Aufnahme einer Gewinde formenden oder schneidenden Schraube oder als Lagebuchse für eine drehbare Welle dienen könnte. Bei einer solchen Auslegung hätte dann die plane Unterseite im Bereich des Nietbördels besondere Vorteile, beispielsweise wenn die Welle oder Achse Teil eines Fensterhebersystems in einem PKW wäre.

Für Details, wie ein solches Element herstellungstechnisch mit einem Blechteil vereint wird, wird auf die oben erwähnte PCT-Anmeldung PCT/EP2003/007436 verwiesen. Eine weitere Nietmutter dieser Art ist in der Anmeldung PCT/EP02/03187 mit der Veröffentlichungsnummer WO 02/077468 beschrieben. Der Inhalt dieser beiden Anmeldungen wird hiermit durch Bezugnahme zu einem Teil der Offenbarung der vorliegenden Anmeldung gemacht. An dieser Stelle soll zum Ausdruck gebracht werden, dass Merkmale der Fig. 42A bis 42E, die mit Bezugszeichen versehen sind, die denen der bisherigen Figuren entsprechen, genauso zu verstehen sind, selbst dann, wenn zur Unterscheidung der Ausführungsformen die Bezugszeichen mit einem Strich oder mehrfachem Strich versehen sind. D.h. die bisherige Beschreibung gilt auch für diese Merkmale, selbst wenn sie mit einem Strich oder mit einem Mehrfachstrich versehen sind. Mit anderen Worten gilt die Beschreibung aller Merkmale mit den gleichen Grundbezugszeichen gilt auch für die Ausführungsform gemäß den Fig. 42A bis 42E.

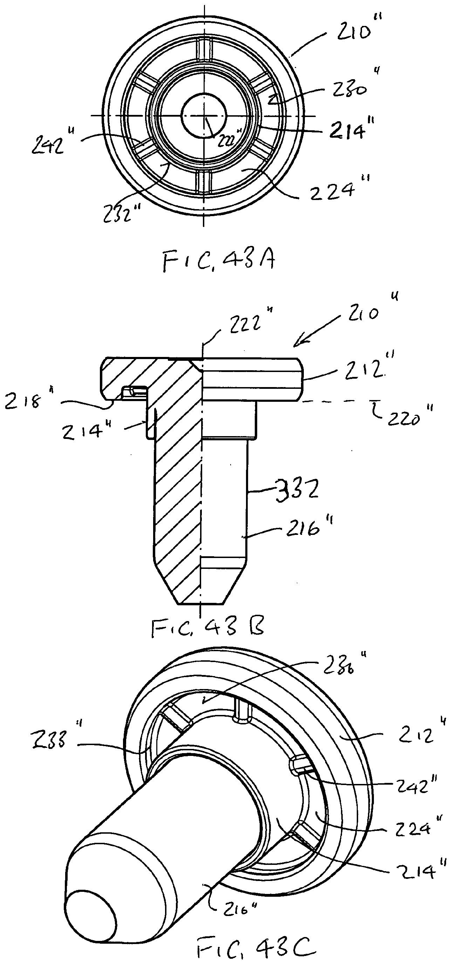

Das gleiche gilt auch für die weiteren Fig. 43A bis 43G, wobei die dort verwendeten Bezugszeichen um die Grundzahl 200 erhöht wurden, um eine klare Unterscheidung herbeizuführen. D.h., wenn man die Zahl 200 von dem jeweiligen Bezugszeichen subtrahiert, die bisherige Beschreibung der entsprechenden Merkmale auch hier gilt, es sei denn, es wird etwas anderes gesagt.

Bezug nehmend auf die Fig. 43A bis 43G wird hier ein Bolzenelement 210" gezeigt, das dem Element 10" sehr ähnlich ist, jedoch einen Schaftteil 332 mit einem Gewindezylinder 216" anstelle eines inneren Gewindezylinders 16" aufweist.

Ein Element dieser Art ist im europäischen Patent 539 743 beschrieben. Bei dem europäischen Patent 539 743 liegt eine Ringvertiefung der Ringnut in der Unterseite des Bolzenkopfes bzw. des Körperteils 212 vor, und zwar auf der Seite, aus der der Schaftteil hervorragt. Die Ringnut bei dem europäischen Patent 539 743 ist aber nicht so ausgelegt, dass sie die hier gestellte Aufgabe lösen könnte. Andererseits gibt es keinen Grund, warum die Ringnut bei diesem europäischen Patent nicht so ausgelegt werden sollte wie hier vorgeschlagen.

Der Nietbolzen 210" ist mit einem Körperteil 212", einem einen Gewindezylinder 216" aufweisenden Schaftteil 332 und einem zylinderförmigen Nietabschnitt 214" versehen. Der Körperteil 212' weist eine ringförmige Auflagefläche 218", die koaxial zum Gewindezylinder in einer Ebene 220" senkrecht zur Längsachse 222" des Gewindezylinders steht, und eine radial innerhalb der ringförmigen Auflagefläche 218" und radial außerhalb des zylindrischen Nietabschnitts 214" angeordnete axial gerichtete Ringnut 224" auf. Die Ringnut 224" geht auf der radial inneren Seite 232" in die äußere Fläche des zylindrischen Nietabschnitts 214" über, wobei Verdrehsicherungsrippen 242" im Bereich der Ringnut 224" vorgesehen sind. Der Nietbolzen zeichnet sich dadurch aus, dass die Ringnut 224" in einer axialen Schnittebene gesehen einen U-förmigen Querschnitt aufweist mit einer radial äußeren Seitenwand 230", die relativ steil ausgeführt ist und an der steilsten Stelle 233" eine Neigung zur mittleren Längsachse des Nietbolzens im Bereich von etwa 45° bis etwa -20°, vorzugsweise von etwa 30° bis etwa 0° aufweist, wobei die steilste Stelle 233" durch einen Inflexionspunkt oder -bereich gebildet sein kann, der durch zwei ineinander gehende Radien am Eingang der Ringnut 224" und am Übergang von der radial äußeren Seite 30 der Ringnut in deren Bodenfläche 236" gebildet ist. Ferner zeichnet sich der Nietbolzen dadurch aus, dass die Verdrehsicherungsrippen 242" sich in radialer Richtung über den Bodenbereich 236" der Ringnut 224" erstrecken und eine axiale Höhe aufweisen, die einen Bruchteil der maximalen axialen Tiefe der Ringnut 224" beträgt und/oder sich erhaben am zylindrischen Nietabschnitt 214" entlang erstrecken. Ferner ist das Volumen der Ringnut derart gewählt, dass über einen Bereich von Blechdicken, der der jeweiligen Gewindegröße angepasst ist, das Volumen des jeweils umgelegten Bereiches 214") des Nietabschnitts innerhalb der durch Einformen des Blechteils 260a bzw. 260b in die Ringnut 224" des Elements gebildeten Ringvertiefung 280" Platz hat und nicht über die der ringförmigen Auflagefläche abgewandten Seite 282" des eingeformten Bleches hinausragt.

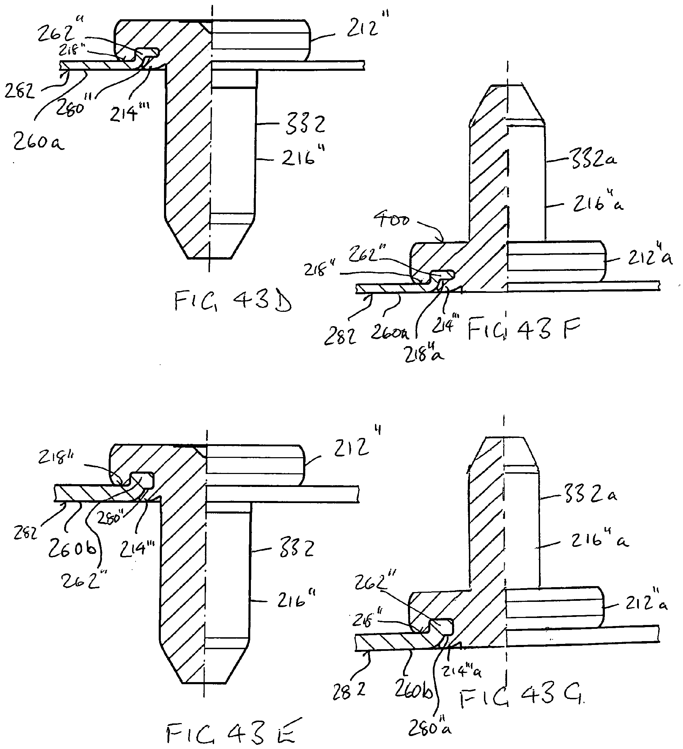

Wie aus einem Vergleich der Fig. 43D und 43E zu sehen ist, gelingt es auch bei dem Bolzenelement den umgebördelten Nietabschnitt 214''' vollständig innerhalb der in der Sicke des Blechteils ausgebildeten Ringvertiefung 218" unterzubringen, so dass die Unterseite des Nietbördels 214''' in den Fig. 43D und 43E flächenbündig mit der Unterseite 282 des Blechteils liegt und damit eine plane Anschraubfläche schafft.

Es ist allerdings auch möglich, das Bolzenelement gemäß den Fig. 43A bis 43E abzuwandeln, und zwar so, wie in den Fig. 43F bzw. G gezeigt. Hier ragt der Schaftteil 323a von der Stirnseite des Körperteils 212"a weg, die vom Blechteil 260a bzw. 260b abgewandt ist und nicht von der Nietabschnittseite des Körperteils 212, wie bei der Ausführungsform gemäß den Fig. 43A bis 43E. D.h. dass der Schaftteil 332a auf der entgegengesetzten Seite des Körperteils 212" vom zylindrischen Nietabschnitt 214" angeordnet ist. Diese Ausführung hat den Vorteil, dass die Nietbördelseite des Elements flächenbündig mit der Unterseite 282 des Blechteils 260a bzw. 260b liegt und das kann für manche Anwendungen vorteilhaft sein. Etwaige kleine Unebenheiten, die im Bereich des Nietbördels verbleiben, können ohne weiteres vor dem Lackieren des Blechteils mit einem Füllmittel gefüllt werden, wenn es sich hier um die Sichtseite handelt. Das anzuschraubende Bauteil wird hier an der dem Blechteil abgewandten Stirnseite des Körperteils 212"a angebracht und durch eine Mutter (nicht gezeigt), die auf den Gewindezylinder 216"a geschraubt wird, auf der Anlagefläche 400 befestigt.

Schließlich wird darauf hingewiesen, dass bei bei allen Ausführungsformen als Beispiel für den Werkstoff des Profils und der daraus hergestellten Funktionselemente alle Materialien genannt werden können, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für das Profil bzw. die Funktionselemente benutzt werden, z.B. AlMg5. Auch kommen Profile bzw. Funktionselemente aus höherfesten Magnesiumlegierungen wie beispielsweise AM50 in Frage.

Der vorliegenden Erfindung liegt mit anderen Wörtern das Konzept zugrunde, dass die Form und das Volumen der axialen Ringnut im Befestigungselement und die Länge und radiale Dicke des zylindrischen Nietabschnitts so aufeinander abgestimmt sind, dass egal welche Dicke das Blechteil innerhalb eines breiten Bereichs (wie bspw. im Anspruch2 für verschiedene Schraubengrößen angegeben ist) aufweist, bei zumindest im Wesentlichen vollständiges Anliegen des Blechteils an der ringförmigen Auflagefläche des Elements, an der radial äußeren Seitenwand der axialen Ringnut des Elements und an der Bodenfläche der axialen Ringnut des Elements, das Volumen der Ringvertiefung im Blechteil auf der der ringförmigen Anlagefläche abgewandten Seite des Blechteils in die den Nietbördel hineingeformt wird und welche mit zunehmender Blechdicke abnimmt, dem Volumen des Nietabschnitts, das ebenfalls mit zunehmender Dicke des Blechteils abnimmt - da die radiale Breite der Ringvertiefung und die verfügbare Länge des umzubördelnden Bereichs des Nietabschnitts mit zunehmender Blechdicke abnimmt - weitestgehend entspricht oder geringfügig größer als dieses ist.

Dies bedeutet, dass das umzubördelnde Volumen des Nietabschnitts stets so in das Volumen der axialen Ringvertiefung im Blechteil, d.h. der axialen Ringvertiefung auf der der ringförmigen Anlagefläche abgewandten Seite des Blechteils - die Unterseite in den Figuren - aufgenommen werden kann, dass die entsprechende Unterseite des Nietbördels mit der Unterseite des Blechteils im Bereich der ringförmigen Auflagefläche des Befestigungselements flüchtet, d.h. in einer Ebene liegt, oder gegenüber die Unterseite des Blechteils zurückversetzt ist und zwar um maximal etwa 0,2 mm.

Die Dicke des Blechteils im Bereich des Befestigungselements ; d.h. vorzugsweise im Bereich der ringförmigen Auflagefläche des Elements, der radial äußeren Seite der axialen Ringnut des Elements und der Bodenfläche dieser axialen Ringnut, entspricht vorzugsweise zumindest im Wesentlichen der Dicke des Blechteils unmittelbar radial außerhalb des Befestigungselements, d.h. im Allgemeinen der Dicke des Ausgangsblechteils. Hier zumindest im Wesentlichen bedeutet vorzugsweise eine Abweichung um maximal +/- 15% der Dicke, vorzugsweise um +/- 10% und besonders bevorzugt weniger als */- 5% der Dicke des Blechteils radial außerhalb des Befestigungselements. Dabei erstreckt sich die Begrenzung des Loches in der Sicke des Blechteils, d.h. dessen Randbereich vorzugsweise bis unmittelbar an den zylindrischen Nietabschnitt heran ohne hier wesentlich dünner oder dicker zu werden, wobei eine gewisse Anpassung an die Form des Übergangs des Boden Bereichs der axialen Ringnut an deren radial inneren Seitenwand zulässig ist.

Es ist allerdings nicht zwingend erforderlich, dass die Dicke des Blechteils im Bereich der radial äußeren Seitenwand der axialen Ringnut und/oder im Bodenbereich dieser Ringnut konstant bleibt, es wäre durchaus vorstellbar, dass der eine oder andere Bereich bei der Ausbildung der Sicke im Blechteil verdickt oder verdünnt wird. Dies könnte eine weitere Möglichkeit darstellen das Volumen des Ringvertiefung in der Unterseite des Blechteils an das Volumen des umzubördelnden Bereiches des Nietabschnitts anzupassen, damit für einen breiten Bereich an Blechdicken die Forderung erfüllt wird das die Unterseite des Nietbördels in der gleiche Ebene wie die Unterseite des Blechteils im Bereich der ringförmigen Anlagefläche liegt oder dieser gegenüber leicht zurückversetzt ist.

Der jeweilige Winkel der radial äußeren Seitenwand der axialen Ringnut in Bezug auf die mittlere Längsachse des Befestigungselements wird vorzugsweise innerhalb des genannten Bereichs gewählt damit eine evtl. vorhanden nach unten offene Ringvertiefung im Blechteil radial außerhalb des Nietbördels möglichst klein ausfällt, wodurch auch die radiale Abmessung des Befestigungselements und daher dessen Gewicht und die Kosten der Herstellung des Elements möglichst gering gehalten werden können. Eine gekrümmte Flache an der radial inneren Seite des Nietbordels im bereich dessen Unterseite ist im Allgemeinen zulässig sofern der Nietbördel an dieser Stell nicht unzulässig geschwächt wird

Bezugszeichenliste

| | |
|---|---|
| 10 | Nietmutter |
| 12 | Körperteil |
| 14 | Nietabschnitt |
| 14' | umgebördelter Nietabschnitt |
| 16 | Gewindezylinder |
| 18 | ringförmige Auflagefläche |
| 20 | Ebene |
| 22 | Längsachse des Gewindes |
| 24 | axiale Ringnut |
| 26 | äußere Fläche des Nietabschnitts |
| 30 | äußere Seitenwand |
| 32 | innere Seitenwand |
| 33 | steilste Stelle |
| 34 | Radius |
| 35 | Radius |
| 36 | Bodenfläche |
| 38 | Linie |
| 40 | Radius |
| 42 | Verdrehsicherungsrippen |

| | |
|---|---|
| 46 | dem Nietabschnitt abgewandte Stirnseite der Nietmutter |
| 48 | Ebene |
| D1 | innerer Durchmesser des Nietabschnitts |
| D2 | äußerer Durchmesser des Gewindezylinders |
| 52 | gerundete Fläche |
| 54 | gerundete Fläche |
| 56 | Rundung am Ende des Nietabschnitts 14 |
| 58 | konusförmige oder gerundete Fläche |
| 60 | Blechteil |
| 62 | Sicke |
| 62' | Erhebung des Blechteils |
| 64 | Loch |
| 66 | Lochrand |
| 66' | Rand der Lochung |
| 70 | Matrize |
| 72 | Vorsprung der Matrize |
| 74 | Schulter der Matrize |
| 76 | kreisförmige Fläche |
| 78 | freie Stirnfläche der Matrize |
| 80 | Ringvertiefung |
| 81 | Oberseite des Blechteils |
| 82 | Unterseite des Blechteils |
| 83 | Ringvertiefung des Nietbördels |
| 84 | zylindrischer Abschnitt des Körperteils |
| 86 | Ringschulter/Andrücksituation |
| 88 | Zylinderabschnitt |
| 90 | gerundete Ecke |
| 92 | gerundete Ecke |
| 94 | Radius |
| 95 | Geradeanteil |
| 96 | Radius |
| 97 | radial äußere Seite der Ringnut |
| 98 | radial innere Seite der Ringnut |
| 99 | Hinterschneidung |
| 100 | inneres Loch der sternförmigen Verdrehsicherung |
| 102 | Spitzen der sterförmigen Verdrehsicherung |
| 104 | Vertiefungen bzw. Taschen |
| 106 | sternförmige Vertiefungen |
| 108 | Erhöhungen |
| 110 | gewellter Verlauf der Ringnut |
| 112 | Berge |
| 114 | Täler |
| 116 | Vertiefungen |
| 118 | Vorsprung |
| 120 | Hinterschneidung |
| 122 | hinterschnittene Ringform |
| 124 | bogenförmige Erhebungen |
| 126 | bogenförmige Vertiefungen |
| 130 | Stanzabschnitt |
| 210 | Nietbolzen |
| 332 | Schaftteil |
| 400 | Anlagefläche |

**Patentansprüche**

1. Zusammenbauteil, umfassend ein Blechteil (60) und eine Nietmutter (10) die dazu ausgebildet ist, mit Blechteilen die verschiedene Blechdicken innerhalb eines Blechdickenbereiches aufweisen können, vernietet zu werden, wobei die Nietmutter einen Körperteil (12) und einen zylinderförmigen Nietabschnitt (14) aufweist, der Körperteil einen mittig angeordneten Gewindezylinder (16), eine ringförmige Auflagefläche (18), die koaxial zum Gewindezylinder in einer Ebene (20) senkrecht zur Längsachse (22) des Gewindezylinders steht, und eine radial innerhalb der ringförmigen Auflagefläche (18) und radial außerhalb des zylindrischen Nietabschnitts (14) angeordnete axial gerichtete Ringnut (24) aufweist, die auf der radial inneren Seite in die äußere Fläche des zylindrischen Nietabschnitts übergeht, und Verdrehsicherungsrippen (42) im Bereich der Ringnut (24) vorgesehen sind, **dadurch gekennzeichnet, dass** die Ringnut (24) in einer axialen Schnittebene gesehen einen U-förmigen Querschnitt aufweist mit einer radial äußeren Seitenwand (30), die relativ steil ausgeführt ist und an der steilsten Stelle (33) eine Neigung zur mittleren Längsachse der Nietmutter im Bereich von etwa 45° bis etwa -20°, dass das Volumen der Ringnut derart gewählt ist, dass über einen Bereich von Blechdicken, der der jeweiligen Gewindegröße angepasst ist, nach der Vernietung des Nietelements mit dem Blechteil das Volumen des jeweils umgelegten Bereiches des Nietabschnitts innerhalb der durch Einformen des Blechteils (60) in die Ringnut (24) des Elements gebildeten Ringvertiefung (80) Platz hat und nicht über die der ringförmigen Auflagefläche abgewandten Seite (82) des eingeformten Bleches hinausragt, und dass der der jeweiligen Blechdicke angepasste Blechdickenbereich wie folgt gewählt ist:

Gewinde M6 oder 1/4 UNF - Blechdickenbereich vorzugsweise 0,5 mm bis 2,5 mm, mindestens 0,6 mm bis 1,5 mm,
Gewinde M8 oder 5/16 UNF - Blechdickenbereich vorzugsweise 0,5 mm bis 2,5 mm, mindestens 0,6 mm bis 1,5 mm,
Gewinde M10 oder 3/8 UNF - Blechdickenbereich vorzugsweise 1,0 mm bis 3,0 mm, mindestens 1,0 mm bis 2,5 mm,
Gewinde M12 oder 7/16 UNF - Blechdickenbereich vorzugsweise 1,0 mm bis 3,5 mm, mindestens 1,0 mm bis 2,5 mm.

2. Zusammenbauteil nach Anspruch 1, **dadurch gekennzeichnet, dass** die einen im Allgemeinen U-förmigen Querschnitt aufweisende Ringnut eine Querschnittsform mit einer U-Form mit einem Bodenbereich (36a; 36b) in einer Ebene senkrecht zur mittleren Längsachse (22) der Nietmutter und mit gerundeten Ecken (90a, 92a; 90b, 92b) im Bereich des Übergangs des Bodenbereiches in die Seitenwände (30a, 32a; 30b, 32b) der Ringnut (24), wobei die gerundeten Ecken einen relativ kleinen Radius, beispielsweise im Bereich zwischen einem Fünftel und einem Zehntel der axialen Tiefe der Ringnut, aufweisen oder einen relativ großen Radius, beispielsweise im Bereich zwischen zwei Drittel und einem Fünftel der axialen Tiefe der Ringnut, aufweisen.

3. Zusammenbauteil nach Anspruch 1 oder Anspruch 2, **dadurch gekennzeichnet, dass** die steilste Stelle (33) durch einen Inflexionspunkt oder -bereich gebildet ist, der durch zwei ineinander gehende Radien am Eingang der Ringnut (24) und am Übergang von der radial äußeren Seite (30) der Ringnut in deren Bodenfläche (36) gebildet ist.

4. Zusammenbauteil nach einem der vorhergehenden Ansprüche, **dadurch gekennzeichnet, dass** die Ringnut (Fig. 33A, Fig. 34A) in Draufsicht eine gewellte Form mindestens an der radial äußeren Seite aufweist, und/oder dass die axiale Tiefe der Ringnut (24) in etwa der radialen Dicke des zylindrischen Nietabschnitts entspricht.

5. Zusammenbauteil nach einem der vorhergehenden Ansprüche, **dadurch gekennzeichnet, dass** sie in Draufsicht kreisrund oder polygonal, insbesondere rechteckig oder quadratisch ist und vorzugsweise, dass der innere Durchmesser ($D_1$) des zylindrischen Nietabschnitts geringfügig größer ist als der Außendurchmesser ($D_2$) des Gewindezylinders und in diesen über einen Gewindeeinlauf (44) übergeht.

6. Zusammenbauteil einer Nietmutter (10) nach einem der vorhergehenden Ansprüche mit einem Blechteil (60), **dadurch gekennzeichnet, dass** das Blechteil (60) im Bereich des Nietabschnitts mit einer Erhebung (62) vorgesehen ist, die zumindest im Wesentlichen an die Form der U-förmigen Nut (24) angepasst ist, und auf seiner der U-förmigen Nut abgewandten Seite eine der Nutform (62) ähnliche Vertiefung (80) aufweist, die aber kleiner ist als die U-förmige Nut, und dass der umgebördelte Nietabschnitt (14) vollständig innerhalb der Vertiefung (80) angeordnet ist und nicht über die dem Gewindezylinder (16) abgewandte Seite des Blechteils hinausragt, vorzugsweise mit dieser flächenbündig oder maximal 0,2 mm zurückversetzt liegt, wobei das Volumen der U-förmigen Nut axial innerhalb der ringförmigen Vertiefung (80) zumindest im Wesentlichen dem Volumen des umgebördelten Nietabschnitts (14') entspricht.

7. Zusammenbauteil nach Anspruch 6, **dadurch gekennzeichnet, dass** die Verdrehsicherungsrippen (42) im Bodenbereich der Ringnut eine axiale Höhe im Bereich zwischen 0,2 und 0,6 mm aufweisen, aber von maximal dem 0,7-fachen der vorgesehenen Blechdicke, vorzugsweise dass von 3 bis 24 Verdrehsicherungsrippen (42) vorgesehen sind, und insbesondere, dass die Verdrehsicherungsrippern (42) gleichmäßig um die mittlere Längsachse (22) der Nietmutter angeordnet sind.

8. Zusammenbauteil nach Anspruch 6 oder Anspruch 7, **dadurch gekennzeichnet, dass** der Rand (66') des Blechteils im Bereich der Lochung (64), durch die sich der Nietabschnitt (14) erstreckt, verdickt bzw. wulstartig ausgebildet ist und der Nietbördel (14') mit einer entsprechenden, den verdickten Rand und diesen aufnehmende Ringvertiefung (90) auf der dem Gewindezylinder (16) zugewandten Seite versehen ist.

9. Zusammenbauteil nach einem der Ansprüche 6 bis 8, **dadurch gekennzeichnet, dass** die Verdrehsicherungsrippen (42) formschlüssig in das Blechmaterial eingreifen, dieses aber nicht durchschneiden.

10. Zusammenbauteil nach einem der vorhergehenden Ansprüche 6 bis 9, **dadurch gekennzeichnet, dass** mit einer Nietmutter bei der Verdrehsicherungsrippen (42") sich erhaben am zylindrischen Nietabschnitt erstrecken, diese formschlüssig in die dem Nietbördel (14') zugewandten Seite des Blechteils eingreifen.

11. Zusammenbauteil, umfassend ein Blechteil (260a, 260b) und einen Nietbolzen (210") der dazu ausgebildet ist, mit Blechteilen die verschiedene Blechdicken innerhalb eines Blechdickenbereiches aufweisen können, vernietet zu werden, wobei der Nietbolzen mit einem Körperteil (212"), einem einen Gewindezylinder (216") aufweisenden Schaftteil (332) und einem zylinderförmigen Nietabschnitt (214"), wobei der Körperteil eine ringförmige Auflagefläche (218), die koaxial zum Gewindezylinder in einer Ebene (220") senkrecht zur Längsachse (222") des Gewindezylinders steht, und eine radial innerhalb der ringförmigen Auflagefläche (218") und radial außerhalb des zylindrischen Nietabschnitts (214") angeordnete axial gerichtete Ringnut (224") aufweist, die auf der radial inneren Seite (232") in die äußere Fläche des zylindrischen Nietabschnitts (214") übergeht, und wobei Verdrehsicherungsrippen (242") im Bereich der Ringnut (224") vorgesehen sind,
**dadurch gekennzeichnet, dass** die Ringnut (224") in einer axialen Schnittebene gesehen einen U-förmigen Querschnitt aufweist mit einer radial äußeren Seitenwand (230"), die relativ steil ausgeführt ist und an der steilsten Stelle (233") eine Neigung zur mittleren Längsachse des Nietbolzens im Bereich von etwa 45° bis etwa -20°, wobei die steilste Stelle (233") durch einen Inflexionspunkt oderbereich gebildet sein kann, der durch zwei ineinander gehende Radien am Eingang der Ringnut (224") und am Übergang von der radial äußeren Seite (30) der Ringnut in deren Bodenfläche (236") gebildet ist, und dass die Verdrehsicherungsrippen (242") sich in radialer Richtung über den Bodenbereich (236") der Ringnut (224") erstrecken und eine axiale Höhe aufweisen, die einen Bruchteil der maximalen axialen Tiefe der Ringnut (224") beträgt und/oder sich erhaben am zylindrischen Nietabschnitt (214") entlang erstrecken, und dass das Volumen der Ringnut derart gewählt ist, dass über einen Bereich von Blechdicken, der der jeweiligen Gewindegröße angepasst ist, dass nach der Vernietung des Nietbolzens mit dem Blechteil das Volumen des jeweils umgelegten Bereiches (214''') des Nietabschnitts innerhalb der durch Einformen des Blechteils (260a bzw. 260b) in die Ringnut (224") des Elements gebildeten Ringvertiefung (280") Platz hat und nicht über die der ringförmigen Auflagefläche abgewandten Seite (282") des eingeformten Bleches hinausragt, dass der der jeweiligen Blechdicke angepasste Blechdickenbereich wie folgt gewählt ist:

Gewinde M6 oder 1/4 UNF - Blechdickenbereich vorzugsweise 0,5 mm bis 2,5 mm, mindestens 0,6 mm bis 1,5 mm,
Gewinde M8 oder 5/16 UNF - Blechdickenbereich vorzugsweise 0,5 mm bis 2,5 mm, mindestens 0,6 mm bis 1,5 mm,
Gewinde M10 oder 3/8 UNF - Blechdickenbereich vorzugsweise 1,0 mm bis 3,0 mm, mindestens 1,0 mm bis 2,5 mm,
Gewinde M12 oder 7/16 UNF - Blechdickenbereich vorzugsweise 1,0 mm bis 3,5 mm, mindestens 1,0 mm bis 2,5 mm.

12. Zusammenbauteil nach Anspruch 12, **dadurch gekennzeichnet, dass** der Nietabschnitt (214") den Schaftteil (332) mit radialem Abstand umgibt oder den Schaftteil (332) anliegend umgibt oder dass der Schaftteil (332a) auf der entgegengesetzten Seite des Körperteils (212"a) vom zylindrischen Nietabschnitt (214") angeordnet ist.

13. Zusammenbauteil nach einem der vorhergehenden Ansprüche 11 bis 12 in Kombination mit einem Blechteil (260a, 260b), **dadurch gekennzeichnet**, das dass das Blechteil (260a, 260b) im Bereich des Nietabschnitts (214") mit einer Erhebung (262) vorgesehen ist, die zumindest im Wesentlichen an die Form der U-förmigen Nut (224") angepasst ist, und auf seiner der U-förmigen Nut (224") abgewandten Seite eine der Nutform ähnliche Vertiefung (280") aufweist, die aber kleiner ist als die U-förmige Nut (224"), und dass der umgebördelte Nietabschnitt (214") vollständig innerhalb der Vertiefung (280") angeordnet ist und nicht über die der ringförmigen Auflagefläche (218) abgewandte Seite des Blechteils hinausragt.

**14.** Zusammenbauteil nach Anspruch 6, **dadurch gekennzeichnet, dass** das Blechteil (60) im Bereich des Nietabschnitts mit einer Erhebung (62) vorgesehen ist, die zumindest im Wesentlichen an die Form der U-förmigen Nut (24) angepasst ist, und auf seiner der U-förmigen Nut abgewandten Seite eine der Nutform (62) ähnliche Vertiefung (80) aufweist, die aber kleiner ist als die U-förmige Nut, und dass der umgebördelte Nietabschnitt (14) vollständig innerhalb der Vertiefung (80) angeordnet ist und nicht über die dem Gewindezylinder (16) abgewandte Seite des Blechteils hinausragt, vorzugsweise mit dieser flächenbündig oder maximal 0,2 mm zurückversetzt liegt.

**15.** Zusammenbauteil nach Anspruch 13 in Kombination mit einem Blechteil (260a, 260b), **dadurch gekennzeichnet, dass** der umgebördelte Nietabschnitt (214") flächenbündig mit der Vertiefung (80) oder maximal um 0,2 mm zurückversetzt in der Vertiefung (80) liegt.

## Claims

**1.** A component assembly comprising a sheet metal part (60) and a rivet nut (10) which is configured to be riveted to sheet metal parts which can have different sheet metal thicknesses within a sheet metal thickness range, wherein the rivet nut has a body part (12) and a cylindrical rivet portion (14); wherein the body part has a centrally arranged thread cylinder (16), a ring-shaped support surface (18) coaxial to the thread cylinder in a plane (20) perpendicular to the longitudinal axis (22) of the thread cylinder and an axially aligned ring groove (24) which is arranged radially inside of the ring-shaped support surface (18) and radially outside of the cylindrical rivet portion (14) and which merges on the radially inner side into the outer surface of the cylindrical rivet portion; and wherein ribs (42) providing security against rotation are provided in the region of the ring groove (24),
**characterized in that** the ring groove (24) has, viewed in an axial sectional plane, a U-shaped cross-section with a radially outer side wall (30) which is made relatively steep and has, at the steepest point (33), an inclination to the middle longitudinal axis of the rivet nut in the range from approximately 45° to approximately -20; **in that** the volume of the ring groove is selected such that, after the riveting of the rivet element to the sheet metal part, the volume of the respective folded over region of the rivet portion over a range of sheet metal thicknesses which is matched to the respective thread size has space within the ring recess (80) formed by shaping the sheet metal part (60) into the ring groove (24) of the element and does not project beyond the side (82) of the shaped sheet metal remote from the ring-shaped support surface; and **in that** the sheet metal thickness range matched to the respective sheet metal thickness is selected as follows:

Thread M6 or 1/4 UNF - sheet metal thickness range preferably 0.5 mm to 2.5 mm, at least 0.6 mm to 1.5 mm;
Thread M8 or 5/16 UNF - sheet metal thickness range preferably 0.5 mm to 2.5 mm, at least 0.6 mm to 1.5 mm;
Thread M10 or 3/8 UNF - sheet metal thickness range preferably 1.0 mm to 3.0 mm, at least 1.0 mm to 2.5 mm;
Thread M12 or 7/16 UNF - sheet metal thickness range preferably 1.0 mm to 3.5 mm, at least 1.0 mm to 2.5 mm.

**2.** A component assembly in accordance with claim 1, **characterized in that** the ring groove having a generally U-shaped cross-section has a cross-sectional shape having a U shape with a base region (36a; 36b) in a plane perpendicular to the middle longitudinal axis (22) of the rivet nut and with rounded corners (90a, 92a; 90b, 92b) in the region of the transition of the base region into the side walls (30a, 32a; 30b, 32b) of the ring groove (24), with the rounded corners having a relatively small radius, for example in the range between one fifth and one tenth of the axial depth of the ring groove, or a relatively large radius, for example in the range between two thirds and one fifth of the axial depth of the ring groove.

**3.** A component assembly in accordance with claim 1 or claim 2, **characterized in that** the steepest point (33) is formed by an inflection point or inflection region which is formed by two mutually merging radii at the inlet of the ring groove (24) and at the transition from the radially outer side (30) of the ring groove into its base surface (36).

**4.** A component assembly in accordance with any one of the preceding claims, **characterized in that** the ring groove (Fig. 33A, Fig. 34A) has a wavy shape at least at the radially outer side in plan view; and/or in that the axial depth of the ring groove (24) approximately corresponds to the radial thickness of the cylindrical rivet portion.

**5.** A component assembly in accordance with any one of the preceding claims, **characterized in that** it is circular or polygonal, in particular rectangular or square, in plan view; and preferably **in that** the inner diameter ($D_1$) of the cylindrical rivet portion is slightly larger than the outer diameter ($D_2$) of the thread cylinder and merges into it over a threaded run-in (44).

6. A component assembly of a rivet nut (10) in accordance with any one of the preceding claims having a sheet metal part (60), **characterized in that** the sheet metal part (60) is provided in the region of the rivet portion with an elevated portion (62) which is matched at least substantially to the shape of the U-shaped groove (24) and has at its side remote from the U-shaped groove a recess (80) which is similar to the groove shape (62), but which is smaller than the U-shaped groove; and **in that** the beaded over rivet portion (14) is arranged completely within the recess (80) and does not project beyond the side of the sheet metal part remote from the thread cylinder (16), is preferably disposed in areal alignment with it or set back by a maximum of 0.2 mm, with the volume of the U-shaped groove axially within the ring-shaped recess (80) corresponding at least substantially to the volume of the beaded over rivet portion (14').

7. A component assembly in accordance with claim 6, **characterized in that** the ribs (42) providing security against rotation have an axial height in the range between 0.2 and 0.6 mm in the base region of the ring groove, but of a maximum of 0.7 times the provided sheet metal thickness; preferably **in that** from 3 to 24 ribs (42) providing security against rotation are provided; and in particular **in that** the ribs (42) providing security against rotation are arranged uniformly around the middle longitudinal axis (22) of the rivet nut.

8. A component assembly in accordance with claim 6 or claim 7, **characterized in that** the margin (66') of the sheet metal part is made in thickened or bead-like form in the region of the hole (64) through which the rivet portion (14) extends; and **in that** the rivet bead (14') is provided on the side facing the thread cylinder (16) with a corresponding ring recess (90) which receives the thickened margin and it.

9. A component assembly in accordance with any one of the claims 6 to 8, **characterized in that** the ribs (42) providing security against rotation engage in shape matched manner into the sheet metal material, but do not cut through it.

10. A component assembly in accordance with any one of the claims 6 to 9, **characterized in that**, with a rivet nut in which ribs (42") providing security against rotation extend in raised form along the cylindrical rivet portion, said ribs (42") providing security against rotation engage in shape matched manner into the side of the sheet metal part facing the rivet bead (14').

11. A component assembly comprising a sheet metal part (260a, 260b) and a rivet bolt (210") which is configured to be riveted to sheet metal parts which can have different sheet metal thicknesses within a sheet metal thickness range, with the rivet bolt comprising a body part (212"), a shaft part (332) having a thread cylinder (216") and a cylindrical rivet portion (214"), wherein the body part has a ring-shaped support surface (218) coaxial to the thread cylinder in a plane (220") perpendicular to the longitudinal axis (222") of the thread cylinder and an axially aligned ring groove (224") which is arranged radially inside the ring-shaped support surface (218") and radially outside the cylindrical rivet portion (214") and which merges on the radially inner side (232") into the outer surface of the cylindrical rivet portion (214"); and wherein ribs (242") providing security against rotation are provided in the region of the ring groove (224"),
**characterized in that** the ring groove (224") has, viewed in an axial sectional plane, a U-shaped cross-section with a radially outer side wall (230") which is made relatively steep and has, at the steepest point (233"), an inclination to the middle longitudinal axis of the rivet bolt in the range from approximately 45° to approximately -20°, with the steepest point (233") being able to be formed by an inflection point or an inflection region which is formed by two mutually merging radii at the inlet of the ring groove (224") and at the transition from the radially outer side (30) of the ring groove into its base surface (236"); and **in that** the ribs (242") providing security against rotation extend in a radial direction over the base region (236") of the ring groove (224") and have an axial height which amounts to a fraction of the maximum axial depth of the ring groove (224") and/or extend in raised form along the cylindrical rivet portion (214"); and **in that** the volume of the ring groove is selected such that, after the riveting of the rivet bolt to the sheet metal part, the volume of the respective folded over region (214'") of the rivet portion over a range of sheet metal thicknesses which is matched to the respective thread size has space within the ring recess (280") formed by shaping the sheet metal part (260a or 260b) into the ring groove (224") of the element and does not project beyond the side (282") of the shaped sheet metal remote from the ring-shaped support surface; and **in that** the sheet metal thickness range matched to the respective sheet metal thickness is selected as follows:

Thread M6 or 1/4 UNF - sheet metal thickness range preferably 0.5 mm to 2.5 mm, at least 0.6 mm to 1.5 mm;
Thread M8 or 5/16 UNF - sheet metal thickness range preferably 0.5 mm to 2.5 mm, at least 0.6 mm to 1.5 mm;
Thread M10 or 3/8 UNF - sheet metal thickness range preferably 1.0 mm to 3.0 mm, at least 1.0 mm to 2.5 mm;

Thread M12 or 7/16 UNF - sheet metal thickness range preferably 1.0 mm to 3.5 mm, at least 1.0 mm to 2.5 mm.

**12.** A component assembly in accordance with claim 12, **characterized in that** the rivet portion (214") surrounds the shaft part (332) with a radial clearance or surrounds the shaft part (332) in a contacting manner; or **in that** the shaft part (332a) is arranged on the opposite side of the body part (212"a) from the cylindrical rivet portion (214").

**13.** A component assembly in accordance with one of the preceding claims 11 to 12 in combination with a sheet metal part (260a, 260b), **characterized in that** the sheet metal part (260a, 260b) is provided in the region of the rivet portion (214") with an elevated portion (262) which is matched at least substantially to the shape of the U-shaped groove (224") and has at its side remote from the U-shaped groove (224") a recess (280") which is similar to the groove shape, but which is smaller than the U-shaped groove (224"); and **in that** the beaded over rivet portion (214") is arranged completely within the recess (280") and does not project beyond the side of the sheet metal part remote from the ring-shaped support surface (218).

**14.** A component assembly in accordance with claim 6, **characterized in that** the sheet metal part (60) is provided in the region of the rivet portion with an elevated portion (62) which is matched at least substantially to the shape of the U-shaped groove (24) and has at its side remote from the U-shaped groove a recess (80) which is similar to the groove shape (62), but which is smaller than the U-shaped groove; and **in that** the beaded over rivet portion (14) is arranged completely within the recess (80) and does not project beyond the side of the sheet metal part remote from the thread cylinder (16), is preferably disposed in areal alignment with it or set back by a maximum of 0.2 mm.

**15.** A component assembly in accordance with claim 13 in combination with a sheet metal part (260a, 260b), **characterized in that** the beaded over rivet portion (214") is disposed in areal alignment with the recess (80) or set back by a maximum of 0.2 mm in the recess (80).

**Revendications**

**1.** Composant assemblé comportant une pièce en tôle (60) et un écrou à riveter (10) qui est réalisé pour être assemblé par rivetage avec des pièces en tôle qui peuvent avoir différentes épaisseurs de tôle à l'intérieur d'une plage d'épaisseur de tôle, dans lequel

l'écrou à riveter comprend une partie de corps (12) et une portion de rivet cylindrique (14),

la partie de corps comprend un cylindre fileté (16) disposé au centre, une surface d'appui annulaire (18) qui est coaxiale par rapport au cylindre fileté dans un plan (20) perpendiculaire à l'axe longitudinal (22) du cylindre fileté et qui présente une rainure annulaire (24) orientée axialement, disposée radialement à l'intérieur de la surface d'appui annulaire (18) et radialement à l'extérieur de la portion de rivet cylindrique (14), rainure qui, sur le côté radialement intérieur, se transforme en la surface extérieure de la portion de rivet cylindrique, et

il est prévu des nervures de blocage anti-rotation (42) dans la zone de la rainure annulaire (24),

**caractérisé en ce que**

la rainure annulaire (24), vue dans un plan en coupe axiale, présente une section transversale en forme de U avec une paroi latérale (30) radialement extérieure qui est réalisée relativement raide et qui présente, à l'emplacement le plus raide (33), une inclinaison par rapport à l'axe longitudinal médian de l'écrou à riveter dans la plage d'environ 45° à environ -20°, **en ce que**

le volume de la rainure annulaire est choisi de telle sorte que, sur une plage d'épaisseurs de tôle adaptée à la taille de filetage respective, après assemblage par rivetage de l'élément à riveter avec la pièce en tôle, le volume de la zone respectivement repliée de la portion de rivet a de la place à l'intérieur du renfoncement annulaire (80) formé par mise en forme de la pièce en tôle (60) dans la rainure annulaire (24) dudit élément et ne dépasse pas au-delà du côté (82) de la tôle mise en forme détourné de la surface d'appui annulaire, et **en ce que**

la plage d'épaisseur de tôle adaptée à l'épaisseur de tôle respective est choisie comme suit :

filetage M6 ou 1/4 UNF - plage d'épaisseur de tôle de préférence de 0,5 mm à 2,5 mm, d'au moins 0,6 mm à 1,5 mm,

filetage M8 ou 5/16 UNF - plage d'épaisseur de tôle de préférence de 0,5 mm à 2,5 mm, d'au moins 0,6 mm à 1,5 mm,

filetage M10 ou 3/8 UNF - plage d'épaisseur de tôle de préférence de 1,0 mm à 3,0 mm, d'au moins 1,0 mm à 2,5 mm,

filetage M12 ou 7/16 UNF - plage d'épaisseur de tôle de préférence de 1,0 mm à 3,5 mm, d'au moins 1,0 mm à 2,5 mm.

**2.** Composant assemblé selon la revendication 1,
**caractérisé en ce que**
la rainure annulaire présentant une section transversale générale en forme de U présente une forme de section transversale ayant une forme en U avec une zone de fond (36a ; 36b) dans un plan perpendiculaire à l'axe longitudinal médian (22) de l'écrou à riveter et avec des coins arrondis (90a, 92a ; 90b, 92b) au niveau de la transition de la zone de fond vers les parois latérales (30a, 32a ; 30b, 32b) de la rainure annulaire (24), les coins arrondis ayant un rayon relativement petit, par exemple dans la plage entre un cinquième et un dixième de la profondeur axiale de la rainure axiale, ou ayant un rayon relativement grand, par exemple dans la plage entre deux tiers et un cinquième de la profondeur axiale de la rainure annulaire.

**3.** Composant assemblé selon la revendication 1 ou selon la revendication 2,
**caractérisé en ce que**
l'emplacement le plus raide (33) est formé par un point ou une zone d'inflexion qui est formé(e) par deux rayons se transformant l'un en l'autre à l'entrée de la rainure annulaire (24) et à la transition du côté radialement extérieur (30) de la rainure annulaire vers sa surface de fond (36).

**4.** Composant assemblé selon l'une des revendications précédentes,
**caractérisé en ce que**
la rainure annulaire (fig. 33A, fig. 34A) présente, en vue de dessus, une forme ondulée au moins sur le côté radialement extérieur, et/ou la profondeur axiale de la rainure annulaire (24) correspond approximativement à l'épaisseur radiale de la portion de rivet cylindrique.

**5.** Composant assemblé selon l'une des revendications précédentes,
**caractérisé en ce que**
en vue de dessus, il est circulaire ou polygonal, en particulier rectangulaire ou carré, et
de préférence, le diamètre intérieur ($D_1$) de la portion de rivet cylindrique est légèrement supérieur au diamètre extérieur ($D_2$) du cylindre fileté et se transforme par celui-ci par une entrée de filetage (44).

**6.** Composant assemblé d'un écrou à riveter (10) selon l'une des revendications précédentes avec une pièce en tôle (60),
**caractérisé en ce que**
au niveau de la portion de rivet, la pièce en tôle (60) est pourvue d'un bossage (62) qui est adapté au moins sensiblement à la forme de la rainure en forme de U (24), et sur son côté détourné de la rainure en forme de U, elle présente un renfoncement (80) similaire à la forme de la rainure (62) qui est cependant plus petit que la rainure en forme de U, et **en ce que** la portion de rivet repliée (14) est disposée complètement à l'intérieur du renfoncement (80), mais elle ne dépasse pas au-delà du côté de la pièce en tôle détourné du cylindre fileté (16), de préférence elle est en affleurement avec celui-ci ou est en retrait au maximum de 0,2 mm, et
le volume de la rainure en forme de U axialement à l'intérieur du renfoncement annulaire (80) correspond au moins sensiblement au volume de la portion de rivet repliée (14').

**7.** Composant assemblé selon la revendication 6,
**caractérisé en ce que**
dans la zone de fond de la rainure annulaire, les nervures de blocage anti-rotation (42) présentent une hauteur axiale dans la plage entre 0,2 et 0,6 mm, cependant au maximum de 0,7 fois l'épaisseur de tôle prévue, de préférence il est prévu 3 à 24 nervures de blocage anti-rotation (42), et en particulier les nervures de blocage anti-rotation (42) sont agencées régulièrement autour de l'axe longitudinal médian (22) de l'écrou à riveter.

**8.** Composant assemblé selon la revendication 6 ou selon la revendication 7,
**caractérisé en ce que**
au niveau du trou (64) à travers lequel s'étend la portion de rivet (14), le bord (66') de la pièce en tôle est réalisé de façon épaissie ou en forme de bourrelet, et le repli de rivetage (14') est pourvu d'un renfoncement annulaire (90) correspondant logeant ledit bord épaissi et ledit repli sur le côté tourné vers le cylindre fileté (16).

**9.** Composant assemblé selon l'une des revendications 6 à 8,
**caractérisé en ce que**
les nervures de blocage anti-rotation (42) viennent s'engager par coopération de forme dans le matériau de tôle, mais ne le traversent pas.

**10.** Composant assemblé selon l'une des revendications précédentes 6 à 9,
**caractérisé en ce que**
dans le cas d'un écrou à riveter, dans lequel les nervures de blocage anti-rotation (42") s'étendent en surélévation au niveau de la portion de rivet cylindrique, celles-ci viennent s'engager par coopération de forme dans le côté de la pièce en tôle tourné vers le repli de rivetage (14').

**11.** Composant assemblé comportant une pièce en tôle (260a, 260b) et un goujon à riveter (210") qui est réalisé pour être assemblé par rivetage avec des pièces en tôle qui peuvent avoir différentes épaisseurs de tôle à l'intérieur d'une plage d'épaisseur de tôle, dans lequel
le goujon à riveter comprend une partie de corps (212"), une partie de tige (332) présentant un cylindre fileté (216") et une portion de rivet cylindrique (214"),
la partie de corps comprend une surface d'appui annulaire (218) qui est coaxiale par rapport au cylindre fileté dans un plan (220") perpendiculaire à l'axe longitudinal (222") du cylindre fileté et qui présente une rainure annulaire (224") orientée axialement, disposée radialement à l'intérieur de la surface d'appui annulaire (218") et radialement à l'extérieur de la portion de rivet cylindrique (214"), rainure qui, sur le côté radialement intérieur (232"), se transforme en la surface extérieure de la portion de rivet cylindrique (214"), et
il est prévu des nervures de blocage anti-rotation (242") dans la zone de la rainure annulaire (224"),
**caractérisé en ce que**
la rainure annulaire (224"), vue dans un plan en coupe axiale, présente une section transversale en forme de U avec une paroi latérale (230") radialement extérieure qui est réalisée relativement raide et présente, à l'emplacement le plus raide (233"), une inclinaison par rapport à l'axe longitudinal médian du goujon à riveter dans la plage d'environ 45° à environ -20°, l'emplacement le plus raide (233") peut être formé par un point ou une zone d'inflexion qui est formé(e) par deux rayons se transformant l'un en l'autre à l'entrée de la rainure annulaire (224") et à la transition du côté radialement extérieur (30) de la rainure annulaire vers sa surface de fond (236"), et **en ce que**
les nervures de blocage anti-rotation (242") s'étendent en direction radiale sur la zone de fond (236") de la rainure annulaire (224") et présentent une hauteur axiale qui est d'une fraction de la profondeur axiale maximale de la rainure annulaire (224"), et/ou elles s'étendent en surélévation le long de la portion de rivet cylindrique (214"), et **en ce que**
le volume de la rainure annulaire est choisi de telle sorte que, sur une plage d'épaisseurs de tôle adaptée à la taille de filetage respective, après l'assemblage par rivetage du goujon à riveter avec la pièce en tôle, le volume de la zone respectivement repliée (214") de la portion de rivet a de la place à l'intérieur du renfoncement annulaire (280") formé par mise en forme de la pièce en tôle (260a ou 260b) dans la rainure annulaire (224") dudit élément et ne dépasse pas au-delà du côté (282") de la tôle mise en forme détourné de la surface d'appui annulaire, et **en ce que**
la plage d'épaisseur de tôle adaptée à l'épaisseur de tôle respective est choisie comme suit :

filetage M6 ou 1/4 UNF - plage d'épaisseur de tôle de préférence de 0,5 mm à 2,5 mm, d'au moins 0,6 mm à 1,5 mm,
filetage M8 ou 5/16 UNF - plage d'épaisseur de tôle de préférence de 0,5 mm à 2,5 mm, d'au moins 0,6 mm à 1,5 mm,
filetage M10 ou 3/8 UNF - plage d'épaisseur de tôle de préférence de 1,0 mm à 3,0 mm, d'au moins 1,0 mm à 2,5 mm,
filetage M12 ou 7/16 UNF - plage d'épaisseur de tôle de préférence de 1,0 mm à 3,5 mm, d'au moins 1,0 mm à 2,5 mm.

**12.** Composant assemblé selon la revendication 12,
**caractérisé en ce que**
la portion de rivet (214") entoure la partie de tige (332) à une distance radiale ou entoure la partie de tige (332) en s'appuyant contre celle-ci, ou **en ce que**
la partie de tige (332a) est disposée sur le côté de la partie de corps (212"a) opposé à la portion de rivet cylindrique (214").

**13.** Composant assemblé selon l'une des revendications précédentes 11 à 12 en combinaison avec une pièce en tôle (260a, 260b),
**caractérisé en ce que**
au niveau de la portion de rivet (214"), la pièce en tôle (260a, 260) est pourvue d'un bossage (262) qui est adapté au moins sensiblement à la forme de la rainure en forme de U (224") et, sur son côté détourné de la rainure en forme de U (224"), elle présente un renfoncement (280") similaire à la forme de rainure, mais qui est plus petit que la rainure en forme de U (224"), et **en ce que**

la portion de rivet repliée (214") est disposée complètement à l'intérieur du renfoncement (280") et ne dépasse pas au-delà du côté de la pièce en tôle détourné de la surface d'appui annulaire (218).

14. Composant assemblé selon la revendication 6,
**caractérisé en ce que**
au niveau de la portion de rivet, la pièce en tôle (60) est pourvue d'un bossage (62) qui est adapté au moins sensiblement à la forme de la rainure en forme de U (24), et sur son côté détourné de la rainure en forme de U, elle présente un renfoncement (80) similaire à la forme de la rainure (62), qui est cependant plus petit que la rainure en forme de U, et **en ce que** la portion de rivet repliée (14) est disposée complètement à l'intérieur du renfoncement (80) et ne dépasse pas au-delà du côté de la pièce en tôle détourné du cylindre fileté (16), de préférence elle est en affleurement avec celui-ci ou est en retrait au maximum de 0,2 mm.

15. Composant assemblé selon la revendication 13 en combinaison avec une pièce en tôle (260a, 260b),
**caractérisée en ce que**
la portion de rivet repliée (214") est en affleurement avec le renfoncement (80) ou est en retrait au maximum de 0,2 mm dans le renfoncement (80).

FIG. 1A

FIG. 1B

FIG. 1D

FIG. 1C

FIG. 2A

FIG. 2B

FIG. 2C

FIG. 2D

FIG. 2E

FIG. 2F

FIG. 3A

FIG. 3B

FIG. 3D

FIG. 3C

FIG 4A

- Ø Niet innen (= D1)
- Ø Niet außen = Ø Nut innen
- Ø Nut außen max.
- Ø Flansch

| Vorgaben | | Abhängige Größen | |
|---|---|---|---|
| Ø Gewinde | $\varnothing_G$ | Dicke Niet | $D_N$ |
| Ø Niet außen | $\varnothing_{Na}$ | Volumen Niet | $V_N$ |
| Ø Niet innen (= D1) | $\varnothing_{Ni}$ | Auflagebreite Flansch | $B_{Fl}$ |
| Ø Flansch | $\varnothing_{Fl}$ | Auflagefläche Flansch | $A_{Fl}$ |
| Länge Niet | $l_N$ | Max. Ø Nut außen | $\varnothing_{Nmax}$ |
| Radius Flansch | $R_{Fl}$ | Min. Ø Nut innen | $\varnothing_{Nmin}$ |
| Max. Bolzenkraft | $F_{Bmax}$ | Breite Nut | $b_N$ |
| Max. Flächenpressung | $P_{max}$ | Tiefe Nut | $t_N$ |

FIG 4B

**Überprüfung für gängige Gewindegrößen und Blechdicken**

| Ø Gewinde | Ø Niet außen | Ø Niet innen | Dicke Niet | Länge Niet | Volumen Niet | Ø Flansch | Radius Flansch | Auflagebreite Flansch | Ø Nut max außen | Bolzenkraft max | Flächenpress. | Breite Nut | Tiefe Nut | Blechdicke | Volumen Restnut | Volumen Restniet |
|---|---|---|---|---|---|---|---|---|---|---|---|---|---|---|---|---|
| 6 | 9,7 | 7,6 | 1,05 | 3,1 | 88 | 16 | 0,5 | 0,8 | 13,4 | 17200 | 482 | 1,85 | 1,4 | 0,5 | 74 | 74,2 |
| | | | | | | | | | | | | | | 1,0 | 60 | 59,9 |
| | | | | | | | | | | | | | | 1,5 | 47 | 45,7 |
| | | | | | | | | | | | | | | 2,0 | 34 | 31,4 |
| | | | | | | | | | | | | | | 2,5 | 21 | 17,1 |
| 8 | 12,8 | 9,6 | 1,60 | 3,6 | 203 | 21 | 0,8 | 1,1 | 17,2 | 31200 | 493 | 2,20 | 2,1 | 0,5 | 174 | 174,5 |
| | | | | | | | | | | | | | | 1,0 | 147 | 146,4 |
| | | | | | | | | | | | | | | 1,5 | 120 | 118,2 |
| | | | | | | | | | | | | | | 2,0 | 94 | 90,1 |
| | | | | | | | | | | | | | | 2,5 | 69 | 61,9 |
| 10 | 15,0 | 11,6 | 1,70 | 4,1 | 291 | 26 | 1,1 | 1,7 | 20,4 | 57800 | 490 | 2,70 | 2,1 | 1,0 | 226 | 220,2 |
| | | | | | | | | | | | | | | 1,5 | 194 | 184,7 |
| | | | | | | | | | | | | | | 2,0 | 163 | 149,2 |
| | | | | | | | | | | | | | | 2,5 | 133 | 113,7 |
| | | | | | | | | | | | | | | 3,5 | 76 | 42,6 |
| 12 | 16,1 | 13,6 | 1,25 | 4,1 | 239 | 28 | 1,4 | 2,1 | 21,0 | 74200 | 487 | 2,45 | 1,8 | 1,0 | 182 | 180,8 |
| | | | | | | | | | | | | | | 1,5 | 154 | 151,6 |
| | | | | | | | | | | | | | | 2,0 | 127 | 122,5 |
| | | | | | | | | | | | | | | 2,5 | 101 | 93,3 |
| | | | | | | | | | | | | | | 3,5 | 51 | 35,0 |

FIG 4C

EP 2 029 903 B1

FIG. 5·A

FIG 5·B

FIG 5·C

FIG 5·D

FIG 5·E

FIG 5·F

FIG 5·G

FIG 5·H

FIG 5·I

FIG 5·J

FIG. 5·K

FIG. 5·L

FIG 5·M

FIG. 6A

FIG. 6B

FIG. 7A

FIG. 7B

88
86
84

22
10e
d
60a 82 14e' FIG 8A

22
10e
88
86
84
d
60b 82 14e' FIG 8B

FIG 9A

FIG 9B

FIG 10 A

FIG. 10 B

16d

10d

88d

86d

84d

12d

d

60a

82 14d'

FIG 11A

16d

10d

88d

86d

84d

12d

d

60b

82 14d'

FIG 11B

FIG. 12A

FIG. 12 B

FIG. 13 A

FIG. 13 B

FIG 14A

FIG. 14B

FIG. 15A

FIG 15 B

FIG 16A

FIG 16 B

FIG. 17A

FIG. 17B

FIG 17C

FIG 17D

FIG 18A

FIG 18B

FIG 18C

FIG 18D

FIG. 19A

FIG 19B

FIG 19C

FIG 19D

FIG. 20 A

FIG 20 B

FIG 20 C

FIG 20 D

FIG 21 A

FIG 21 B

FIG 21 C

FIG 21 D

FIG 22A

FIG 22B

FIG 22C

FIG 22D

FIG. 23 A

FIG. 23 B

FIG. 23 C

FIG. 23 D

FIG. 24A

FIG. 24B

FIG. 24C

FIG. 24D

FIG 25A

FIG 25B

FIG 25C

FIG 25D

FIG. 26A

FIG. 26B

FIG. 26C

FIG. 26D

FIG 27 A

FIG 27 B

FIG 27 C

FIG 27 D

FIG 28A

FIG 28B

FIG 28C

FIG 28D

FIG 29A

FIG 29B

FIG 29C

FIG 29D

FIC. 80A

FIC. 80B

FIC. 30C

FIC. 30D

FIG. 31A

FIG. 31B

FIG. 31C

FIG. 31D

FIG 32 A

FIG 32 B

FIG 32 C

FIG 32 C

FIG 33 A

FIG 33 B

FIG 33 C

FIG 33 D

FIG 34A

FIG 34B

FIG 34C

FIG 34D

59

FIG 35A

FIG 35B

FIG 35C

FIG 35D

FIG. 36 A

FIG 36 B

FIG 36 C

FIG 36 D

FIG 37A

FIG 37B

FIG 37C

FIG 37D

FIG 38 A

FIG 38 B

FIG 38 C

FIG 38 D

FIG 39 A

FIG 39 B

FIG 39 C

FIG. 39 D

FIG 40A

FIG 40B

FIG 40C

FIG 40D

FIG 41A

FIG 41B

FIG 41C

FIG 41D

FIG 42A

FIG 42B

FIG 42C

FIG. 42D

FIG 42E

FIG. 43A

FIG. 43B

FIG. 43C

FIG 43D

FIG 43F

FIG 43E

FIG 43G

**EP 2 029 903 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1116891 A
- EP 593793 A
- EP 0539793 A1
- US 6318940 B1
- FR 2792270 A
- US 3213914 A
- DE 102005024220
- EP 2006004977 W

- WO 2006125634 A
- EP 2006125634 W
- DE 102006000918
- EP 2003007436 W
- WO 2004034520 A
- EP 0203187 W
- WO 02077468 A
- EP 539743 A